# EUROPEAN PATENT APPLICATION

(11) **EP 4 840 325 A2**
(43) Date of publication of application: **18.11.2026**
(21) Application number: 26200601.8
(22) Date of filing: 16.03.2021
(51) Int. Cl.: A23L 33/19

(54) **NOVEL HIGH PROTEIN, ACIDIFIED DAIRY PRODUCT, ITS METHOD OF PRODUCTION AND A NOVEL WHEY PROTEIN POWDER FOR PRODUCING THE ACIDIFIED DAIRY PRODUCT**

(30) Priority: 16.03.2020 EP 20163384
(62) Document number(s) of the earlier application(s) in accordance with Art. 76 EPC: 21711581.5 / 4 120 840
(71) Applicant: Arla Foods amba, 8260 Viby J (DK)
(72) Inventor: ELVERLOV-JAKOBSEN, Jannik Ejnar, 8260 Viby J (DK)
(74) Representative: Guardian IP Consulting I/S

(57) **Abstract**

The present invention pertains to a method of producing a high protein, acidified dairy product by combining a whey protein powder having a pH in the range 3.8-5.2 with a first acidified dairy product.

## Description

### FIELD OF THE INVENTION

The present invention pertains to a method of producing high protein, acidified dairy product based on addition of whey protein powder having a pH in the range 3.8-5.2 to a first acidified dairy product.

### BACKGROUND

Acidified dairy products such as yoghurts are a popular source of macronutrients and are a particularly valuable source of protein.

Various approaches to the production of high protein, acidified dairy products have been described in the art.

WO2016097308A1 discloses a method of producing high protein yoghurts which involves addition of native whey protein to a casein concentrate followed by moderate pasteurization and fermentation.

Jørgensen et al ("Processing of high-protein yoghurt - A review"; International Dairy Journal, 88 (2019), p 42-59) discloses various techniques for production of high protein yoghurts incl. methods wherein the yoghurt milk is concentrated by membrane filtration and methods wherein the yoghurt milk is enriched with whey protein prior to pasteurization and fermentation.

### SUMMARY OF THE INVENTION

The present inventors have discovered that improved high protein, acidified dairy products can advantageously be produced by enriching a first acidified dairy product with a whey protein powder that has a pH in the range of 3.8-5.2.

Thus, an aspect of the invention pertains to a method of producing a high protein, acidified dairy product comprising the steps of:
a) providing a first acidified dairy product having:
   - a pH in the range of 3.8-5.2,
   - a protein content in the range of 2-12% w/w, and
   - a total solids content of 5-35% w/w,
b) providing a whey protein powder having:
   - a pH in the range of 3.8-5.2,
   - a protein content of at least 50% w/w
   - a weight ratio between the protein content and the sum of Ca and Mg of at least 200,
   - preferably, a combined content of carbohydrate and protein of at least 80% w/w,
      and
   - preferably, a degree of protein denaturation of at most 15%,
c) combining the first acidified dairy product, the whey protein powder and optionally one or more further ingredients to form a mixture having a protein content in the range of 10-30% w/w,
d) optionally, combining the mixture with one or more additional ingredients, and
e) optionally, filling the mixture or a combination of the mixture and one or more additional ingredients into suitable containers,
wherein the high protein, acidified dairy product is the mixture obtained from step c) or the combination of the mixture and one or more additional ingredients.

Another aspect of the invention pertains to a high protein, acidified dairy product having:
- a pH in the range of 3.8-5.2,
- a protein content in the range of 10-30% w/w, and
- a total solids content of 5-40% w/w.

Yet an aspect of the invention pertains to a whey protein powder having:
- a pH in the range of 3.8-5.2,
- a protein content of at least 50% w/w,
- a weight ratio between the protein content and the sum of Ca and Mg of at least 200, and
- preferably, a combined content of carbohydrate and protein of at least 80% w/w,
- preferably, a degree of protein denaturation of at most 15%.

A further aspect of the invention pertains to the use of the whey protein powder as defined herein as a food ingredient, preferably for:
- enriching the protein content of a food product, preferably an acidified dairy product, and/or
- increasing the content of native whey protein of a food product, preferably an acidified dairy product, and/or
- improving the taste of high protein, acidified dairy products, and/or
- improving the stability high protein, acidified dairy products, and/or
- improving the texture of high protein, acidified dairy products.

### BRIEF DESCRIPTION OF THE FIGURES

Figure 1 illustrates a preferred embodiment of the invention wherein the whey protein powder (WPP) is mixed directly with the first acidified dairy product (1st ADP).
Figure 2 illustrates another preferred embodiment of the invention wherein the whey protein powder (WPP) is mixed with an aqueous composition to form a premixture which is mixed with the first acidified dairy product (1st ADP).
Figure 3 shows a non-pasteurised high protein, acidified dairy product with protein content of 28% w/w being pumped into a bucket.
Figure 4 illustrates the pourability of a pasteurized high protein, acidified dairy product with protein content of 28% w/w.

### DETAILED DESCRIPTION

An aspect of the invention pertains to the method of producing a high protein, acidified dairy product comprising the steps of:
a) providing a first acidified dairy product having:
   - a pH in the range of 3.8-5.2,
   - a protein content in the range of 2-12% w/w, and
   - a total solids content of 5-35% w/w,
b) providing a whey protein powder having:
   - a pH in the range of 3.8-5.2,
   - a protein content of at least 50% w/w,
   - a weight ratio between the protein content and the sum of Ca and Mg of at least 200,
   - preferably, a combined content of carbohydrate and protein of at least 80% w/w, and
   - preferably, a degree of protein denaturation of at most 15%,
c) combining the first acidified dairy product, the whey protein powder and optionally one or more further ingredients to form a mixture having a protein content in the range of 10-30% w/w,
d) optionally, combining the mixture with one or more additional ingredients, and
e) optionally, filling the mixture or a combination of the mixture and one or more additional ingredients into suitable containers,
wherein the high protein, acidified dairy product is the mixture obtained from step c) or the combination of the mixture and one or more additional ingredients.

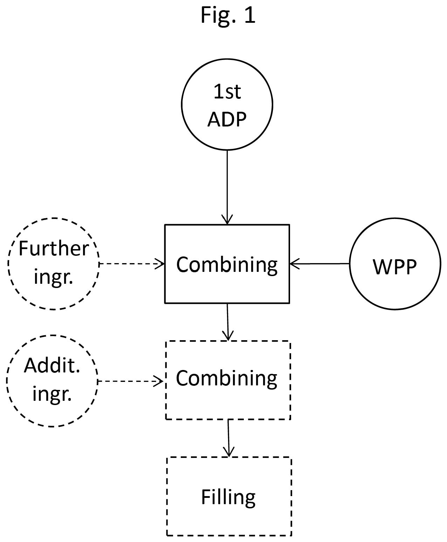

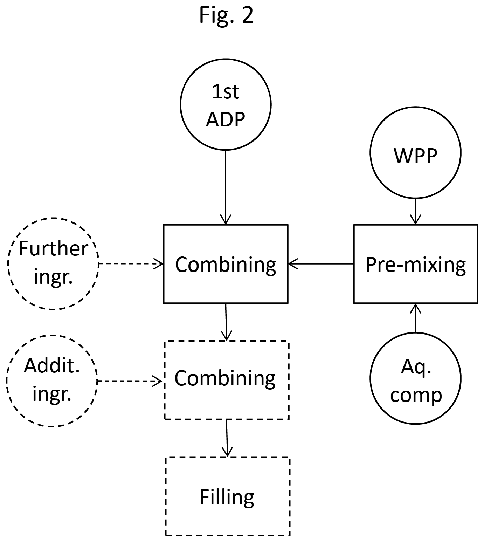

Two preferred embodiments of the method are depicted in Figures 1 and 2. Figure 1 illustrates preferred embodiments wherein the whey protein powder (WPP) is mixed directly with the first acidified dairy product (1st ADP) and optionally with further ingredients. After mixing the first acidified dairy product with at least the whey protein powder, the mixture is preferably given time to hydrate the protein provided by the powder and it is furthermore preferred to apply homogenisation to the mixture. Subsequently, one or more additional ingredients, such as e.g. a fruit preparation, may be added to the mixture, and preferably the mixture or the combination of the mixture and the one or more additional ingredients are filled into a suitable container.

Figure 2 illustrates other preferred embodiments wherein the whey protein powder (WPP) is mixed with an aqueous composition, preferably a second acidified dairy product and optionally with further ingredients to form a premixture. The premixture is then mixed with the first acidified dairy product (1st ADP) and optionally with further ingredients to form a mixture. Similar to the mixture of Figure 1, one or more additional ingredients, such as e.g. a fruit preparation, may be added to the mixture of Figure 2, and preferably the mixture or the combination of the mixture and the one or more additional ingredients are filled into a suitable container.

In some preferred embodiments of the invention the method comprises the steps a), b), and c) and the high protein, acidified dairy product is the mixture obtained from step c).

In other preferred embodiments of the invention the method comprises the steps a), b), c) and d) and the high protein, acidified dairy product is the mixture obtained from step d).

In further preferred embodiments of the invention the method comprises the steps a), b), c), d) and e) and the high protein, acidified dairy product is the mixture obtained from step e).

In even further preferred embodiments of the invention the method comprises the steps a), b), c) and e) and the high protein, acidified dairy product is the mixture obtained from step e).

In the context of the present invention the term "acidified dairy product" pertains to a food product having a pH of at most 5.2 and in which at least 50% w/w and preferably all of the protein is milk protein, i.e. derived from mammal milk. Useful examples of acidified dairy products are e.g. yoghurt, skyr, quark, or cream cheese and may e.g. be liquid and hence drinkable, more viscous but spoonable, or even highly viscous but spreadable.

In the context of the present invention the term "milk protein" relates to protein that can be isolated from mammal milk or derived from mammal milk or milk protein isolates by e.g. heat-denaturation and/or proteolytic hydrolysis. The term "milk protein" therefore both encompasses the total milk protein fraction as well as isolates of sub-fractions or of individual milk proteins such as e.g. individual casein species and/or individual whey protein species.

In the context of the present invention the term "high protein, acidified dairy product" pertains to an acidified dairy product that has a protein content of at least 8% w/w relative to the weight of the product.

In the context of the present invention the terms "first acidified dairy product" and "second acidified dairy product" are acidified dairy products as defined herein and may have the same composition or may have different compositions.

In the context of the present invention, the term "whey protein" pertains to protein that is found in whey or in milk serum. Whey protein may be a subset of the protein species found in whey or milk serum or it may be the complete set of protein species found in whey or/and in milk serum.

The term "milk serum" pertains to the liquid which remains when casein and milk fat globules have been removed from milk, e.g. by microfiltration or large pore ultrafiltration. Milk serum may also be referred to as "ideal whey".

The term "milk serum protein" or "serum protein" pertains to the protein that is present in the milk serum.

The term "whey" pertains to the liquid supernatant that is left after the casein of milk has been precipitated and removed. Casein precipitation may e.g. be accomplished by acidification of milk and/or by use of rennet enzyme.

Several types of whey exist, such as "sweet whey", which is the whey product produced by rennet-based precipitation of casein, and "acid whey" or "sour whey" which is the whey product produced by acid-based precipitation of casein. Acid-based precipitation of casein may e.g. be accomplished by addition of food acids or by means of bacterial cultures.

In the context of the present invention the term "whey protein powder" pertains to a powder that contains protein in an amount of at least 50% w/w and wherein the protein primarily comprises whey protein, e.g. isolated from whey or milk serum. The whey protein powder is preferably a whey protein concentrate, milk serum protein concentrate, a whey protein isolate or a milk serum protein isolate.

In the context of the present invention, the terms "whey protein concentrate" and "milk serum protein concentrate" pertains to preparations of whey or milk serum containing in the range of approx. 20-89% w/w protein relative to total solids.

In the context of the present invention, the terms "whey protein isolate" and "milk serum protein isolate" pertain to preparations of whey or milk serum containing at least 90% w/w protein relative to total solids.

In some preferred embodiments of the invention the first acidified dairy product has a pH in the range of 3.9-5.1, more preferably 4.0-5.0, even more preferably 4.1-4.9, and most preferably 4.3-4.7.

Yoghurt, skyr, quark, or cream cheese are preferred examples of the first acidified dairy product.

In some preferred embodiments of the invention the first acidified dairy product has a protein content in the range of 2-10% w/w, more preferably 2-8% w/w, even more preferably 2-6% w/w, and most preferably 2-4% w/w.

In some preferred embodiments of the invention the first acidified dairy product has a protein content in the range of 4-12% w/w, more preferably 6-12% w/w, even more preferably 8-12% w/w, and most preferably 8-11% w/w.

The milk protein of the first acidified dairy product is derived mammal milk and preferably from one or more of the following ruminants: cow, sheep, goat, buffalo, camel, llama, mare and/or deer. Milk protein derived from bovine (cow) milk is particularly preferred.

The first acidified dairy product often contains casein or whey protein. In some preferred embodiments of the present invention the first acidified dairy product has a weight ratio between whey protein and casein in the range of 0:100-90:10, more preferably 5:95-70:30, even more preferably 10:90-50:50, and most preferably 15:85-40:60.

In other preferred embodiments of the present invention the first acidified dairy product has a weight ratio between whey protein and casein in the range of 100:0-25:75, more preferably 100:0-80:20, even more preferably 100:0-90:10, and most preferably 100:0-95:5.

In some preferred embodiments of the invention the first acidified dairy product has a total solids content of 5-35% w/w, more preferably 10-30% w/w, even more preferably 15-25% w/w, and most preferably 17-20% w/w.

In some preferred embodiments of the invention the first acidified dairy product has a carbohydrate content in the range of 1-15% w/w, more preferably 2-12% w/w, even more preferably 2-10% w/w, and most preferably 3-10% w/w.

In some preferred embodiments of the invention the first acidified dairy product has a fat content in the range of 0-10% w/w, more preferably 0-6% w/w, even more preferably 0-5% w/w, and most preferably 0-3.5% w/w. These levels of fat may for example be relevant if the first acidified dairy product is a quark or a yoghurt.

In other preferred embodiments of the invention the first acidified dairy product has a fat content in the range of 5-15% w/w, more preferably 6-14% w/w, even more preferably 7-13% w/w, and most preferably 8-11% w/w. These levels of fat may for example be relevant if the first acidified dairy product is Greek yoghurt.

In further preferred embodiments of the invention the first acidified dairy product has a fat content in the range of 15-30% w/w, more preferably 18-29% w/w, even more preferably 20-28% w/w, and most preferably 22-27% w/w. These levels of fat may for example be relevant if the first acidified dairy product is a cream cheese.

In some preferred embodiments of the invention the first acidified dairy product has a water content in the range of 65-95% w/w, more preferably 70-90% w/w, even more preferably 75-85% w/w, and most preferably 80-83% w/w.

In some preferred embodiments of the invention the first acidified dairy product has a viscosity in the range of 10-200 cP at 5 degrees C. This range of viscosity is e.g. preferred if the first acidified dairy product is a drinking yoghurt.

In other preferred embodiments of the invention the first acidified dairy product has a viscosity in the range of 201-5000 cP at 5 degrees C. This range of viscosity is e.g. preferred if the first acidified dairy product is a stirred yoghurt.

In further preferred embodiments of the invention the first acidified dairy product has a texture of 4000-40000 force area (g*sec) at 12 degrees C. This range of texture is e.g. preferred if the first acidified dairy product is a set yoghurt, a cream cheese or a similar spreadable product.

The first acidified dairy product is typically, and preferably, prepared by bacterial fermentation of a carbohydrate that contains at least lactose and will therefore contain lactate.

The present inventors have found that it is advantageous to limit the content of lactate in the first acidified dairy product.

In some preferred embodiments of the invention the first acidified dairy product has a content of lactate of at most 1.0% w/w, more preferably at most 0.9% w/w, even more preferably at most 0.8% w/w, and most preferably at most 0.6% w/w.

In other preferred embodiments of the invention the first acidified dairy product has a content of lactate of 0.2-1.0% w/w, more preferably 0.3-0.9% w/w, even more preferably 0.3-0.8% w/w, and most preferably 0.4-0.6% w/w.

In some preferred embodiments of the invention the first acidified dairy product has a total content of low molecular weight carboxylic acids and their carboxylates of at most 1% w/w, more preferably at most 0.9% w/w, even more preferably at most 0.8% w/w, and most preferably at most 0.6% w/w.

In other preferred embodiments of the invention the first acidified dairy product has a total content of low molecular weight carboxylic acids and their carboxylates of 0.2-1.0% w/w, more preferably 0.3-0.9% w/w, even more preferably 0.3-0.8% w/w, and most preferably 0.4-0.6% w/w.

In the present context the term "low molecular weight carboxylic acids and their carboxylates" refers to carboxylic acids having a molecular weight of at most 400 g/mol in protonated, partially deprotonated and fully deprotonated forms. Examples of low molecular weight carboxylic acids and their carboxylates are citric acid, citrate, lactic acid, lactate, gluconic acid, gluconate, lactobionic acid, and lactobionate.

In some preferred embodiments of the invention the first acidified dairy product has a degree of protein denaturation of at least 80%, more preferably at least 85%, even more preferably at least 90%, and most preferably at least 95%.

In some preferred embodiments of the invention the first acidified dairy product has a content of LAB of at least 1*10⁶ colony forming units (cfu)/g, more preferably at least 1*10⁷ cfu/g, even more preferably 1*10⁸ cfu/g, and most preferably 1*10⁹ cfu/g.

In other preferred embodiments of the invention the first acidified dairy product has a content of LAB of 1*10⁶ - 9*10¹⁰ cfu/g, more preferably 1*10⁷ - 7*10¹⁰ cfu/g, even more preferably 1*10⁸ - 5*10¹⁰, and most preferably 1*10⁹ - 3*10¹⁰ cfu/g.

Step b) involves the provision of a whey protein powder.

The whey protein powder of step b) has:
- a pH in the range of 3.8-5.2,
- a protein content of at least 50% w/w, and
- a weight ratio between the protein content and the sum of Ca and Mg of at least 200.

In the present context the terms "protein content" and "total protein" are used interchangeably.

In some preferred embodiments of the invention the whey protein powder has a pH in the range of 3.9-5.1, more preferably 4.0-5.0, even more preferably 4.1-4.9, and most preferably 4.3-4.7.

The pH of a powder is measured according to Analysis 2.

The present inventors have found that it is advantageous to use a whey protein powder, which has approximately the same pH as the first acidified dairy product and that this seems to benefit the storage stability and textural properties of the high protein, acidified dairy product.

Thus, in some preferred embodiments of the invention the whey protein powder has a pH, which is at most 1 pH unit higher or lower than the pH of the first acidified dairy product, more preferably at most 0.7 pH unit higher or lower, even more preferably at most 0.5 pH unit higher or lower and most preferred at most 0.3 pH unit higher or lower than the pH of the first acidified dairy product.

If the whey protein powder is mixed with a second acidified dairy product to form a premix-tureprior to the combination with the first acidified dairy product, it is equally preferred that the whey protein powder has a pH, which is at most 1 pH unit higher or lower than the pH of the second acidified dairy product, more preferably at most 0.7 pH unit higher or lower, even more preferably at most 0.5 pH unit higher or lower and most preferred at most 0.3 pH unit higher or lower than the pH of the second acidified dairy product.

In some preferred embodiments of the invention the whey protein powder comprises:
50-100% w/w protein relative to total solids,
15-100% w/w BLG relative to total protein,
0-50% w/w ALA relative to total protein, and
0-40% w/w CMP relative to total protein.

In some preferred embodiments of the invention the whey protein powder comprises:
50-89% w/w protein relative to total solids,
15-90% w/w BLG relative to total protein,
4-50% w/w ALA relative to total protein, and
0-40% w/w CMP relative to total protein.

More preferably, the whey protein powder comprises:
60-89% w/w protein relative to total solids,
20-80% w/w BLG relative to total protein,
4-50% w/w ALA relative to total protein, and
0-40% w/w CMP relative to total protein.

Most preferably the whey protein powder comprises:
70-89% w/w protein relative to total solids,
30-65% w/w BLG relative to total protein,
4-35% w/w ALA relative to total protein, and
0-25% w/w CMP relative to total protein.

In some preferred embodiments of the invention the whey protein powder comprises:
50-89% w/w protein relative to total solids,
91-100% w/w BLG relative to total protein,
0-6% w/w ALA relative to total protein, and
0-4% w/w CMP relative to total protein.

More preferably, the whey protein powder comprises:
60-89% w/w protein relative to total solids,
94-100% w/w BLG relative to total protein,
0-4% w/w ALA relative to total protein, and
0-3% w/w CMP relative to total protein.

Most preferably the whey protein powder comprises:
70-89% w/w protein relative to total solids,
96-100% w/w BLG relative to total protein,
0-2% w/w ALA relative to total protein, and
0-2% w/w CMP relative to total protein.

In some preferred embodiments of the invention the whey protein powder comprises:
90-100% w/w protein relative to total solids,
15-90% w/w BLG relative to total protein,
4-50% w/w ALA relative to total protein, and
0-40% w/w CMP relative to total protein.

More preferably, the whey protein powder comprises:
91-98% w/w protein relative to total solids,
20-80% w/w BLG relative to total protein,
4-50% w/w ALA relative to total protein, and
0-40% w/w CMP relative to total protein.

Most preferably the whey protein powder comprises:
92-97% w/w protein relative to total solids,
30-65% w/w BLG relative to total protein,
4-35% w/w ALA relative to total protein, and
0-25% w/w CMP relative to total protein.

In other preferred embodiments of the invention the whey protein powder comprises:
91-100% w/w protein relative to total solids,
91-100% w/w BLG relative to total protein,
0-6% w/w ALA relative to total protein, and
0-4% w/w CMP relative to total protein.

More preferably, the whey protein powder comprises:
91-99% w/w protein relative to total solids,
94-100% w/w BLG relative to total protein,
0-4% w/w ALA relative to total protein, and
0-3% w/w CMP relative to total protein.

Most preferably the whey protein powder comprises:
91-99% w/w protein relative to total solids,
96-100% w/w BLG relative to total protein,
0-2% w/w ALA relative to total protein, and
0-2% w/w CMP relative to total protein.

In some preferred embodiments of the invention the whey protein powder has a protein content of at least 60% w/w, more preferably at least 75% w/w, even more preferably at least 80% w/w, and most preferably at least 82% w/w.

In other preferred embodiments of the invention the whey protein powder has a protein content of at least 86% w/w, more preferably at least 88% w/w, even more preferably at least 90% w/w, and most preferably at least 92% w/w.

In some preferred embodiments of the invention the whey protein powder has a protein content of 60-100% w/w, more preferably 70-97% w/w, and most preferably at least 75-95% w/w.

The protein of the whey protein powder is preferably whey protein derived from mammal milk and preferably from one or more of the following ruminants: cow, sheep, goat, buffalo, camel, llama, mare and/or deer. Whey protein derived from bovine (cow) milk is particularly preferred.

In some preferred embodiments of the invention the whey protein powder has a combined content of carbohydrate and protein of at least 80% w/w, more preferably at least 85% w/w, even more preferably at least 90% w/w, and most preferably at least 92% w/w.

In some preferred embodiments of the invention the whey protein powder has a weight ratio between the protein content and the sum of Ca and Mg of at least 300, more preferably at least 400, even more preferably at least 600, and most preferably at least 800.

The inventors have found it advantageous that the whey protein powder has weight ratio between the protein content and the sum of Ca and Mg of at least 200. More particularly, the inventors have observed that high weight ratios between protein and the sum Ca and Mg provides a better taste when the whey protein powder is used in significant amounts in acidified dairy products of the present invention.

In other preferred embodiments of the invention the whey protein powder has a weight ratio between the protein content and the sum of Ca and Mg of at least 1000, more preferably at least 1400, even more preferably at least 1800, and most preferably at least 2000.

In some preferred embodiments of the invention the whey protein powder has a weight ratio between the protein content and the sum of Ca and Mg of 200-10000, more preferably 600-6000, and most preferably 800-4000.

In other preferred embodiments of the invention the whey protein powder has a weight ratio between the protein content and the sum of Ca and Mg of 1000-10000, more preferably 1400-6000, even more preferably 1800-5000, and most preferably 2000-4000.

In some preferred embodiments of the invention the whey protein powder has a weight ratio between the protein content and the sum of K and Na of at least 50, more preferably at least 60, even more preferably at least 70, and most preferably at least 90.

Even higher ratios may be preferred and in some preferred embodiments of the invention the whey protein powder has a weight ratio between the protein content and the sum of K and Na of at least 100, more preferably at least 200, even more preferably at least 500, and most preferably at least 1000.

In other preferred embodiments of the invention the whey protein powder has a weight ratio between the protein content and the sum of K and Na of 50-2000, more preferably 60-1500, even more preferably 70-1000, and most preferably 90-1000.

In some preferred embodiments of the invention the whey protein powder has a degree of protein denaturation of at most 15%, more preferably at most 12%, even more preferably at most 10%, and most preferably at most 8%.

In other preferred embodiments of the invention the whey protein powder has a degree of protein denaturation of at most 6%, more preferably at most 4%, even more preferably at most 2%, and most preferably at most 1%.

It is often preferred that the whey protein powder has low bacterial count. This makes it possible to add the whey protein powder to an acidified dairy product without subsequent heat-treatment.

In some preferred embodiments of the invention the whey protein powder has a total plate count of at most 10.000 cfu/g, more preferably at most 5.000 cfu/g, even more preferably at most 2000 cfu/g and most preferably at most 1000 cfu/g.

The total plate count is measured according to ISO 4833-1 with incubation at 30 degrees C.

Even lower total plate count are often preferred and in some preferred embodiments of the invention the whey protein powder has a total plate count of at most 600 cfu/g, more preferably at most 400 cfu/g, even more preferably at most 200 cfu/g and most preferably at most 100 cfu/g. It is particularly preferred that the whey protein powder is sterile.

In some preferred embodiments of the invention the whey protein powder has a content of Enterobacteriaceae of at most 100 cfu/g, more preferably at most 50 cfu/g, even more preferably at most 20 cfu/g and most preferably 10 cfu/g.

The content of Enterobacteriaceae is determined according to ISO 21528-2.

In some preferred embodiments of the invention the whey protein powder has a content of Enterobacteriaceae of at most 8 cfu/g, more preferably at most 5 cfu/g, even more preferably at most 1 cfu/g and most preferably no cfu/g.

In some preferred embodiments of the invention the whey protein powder has a content of Bacillus cereus of at most 100 cfu/g, more preferably at most 50 cfu/g, even more preferably at most 20 cfu/g and most preferably at most 100 cfu/g.

The content of Bacillus cereus is determined according to ISO 7932.

In some preferred embodiments of the invention the whey protein powder has a content of sulphur reducing Clostridia of at most 500 cfu/g, more preferably at most 300 cfu/g, even more preferably at most 200 cfu/g/ and most preferably at most 100 cfu/g.

Even lower counts may be preferred and in other preferred embodiments of the invention the whey protein powder has a content of sulphur reducing Clostridia of at most 50 cfu/g, more preferably at most 30 cfu/g, even more preferably at most 20 cfu/g and most preferably at most 10 cfu/g.

The content of sulphur reducing Clostridia is determined according to ISO 15213.

In some preferred embodiments of the invention the whey protein powder has a content of yeast and mould of at most 100 cfu/g, more preferably at most 50 cfu/g, even more preferably at most 20 cfu/g, and most preferably at most 10 cfu/g.

Even lower contents may be preferred and in some preferred embodiments of the invention the whey protein powder has a content of yeast and mould of at most 8 cfu/g, more preferably at most 5 cfu/g, even more preferably at most 2 cfu/g, and most preferably at most 10 cfu/g.

The combined content of yeast and mould is determined according to ISO 6611.

In some preferred embodiments of the invention the whey protein powder does not contain any of Staphylococcus aureus, Salmonella, or Listeria Monocytogenes.

The presence of non-presence of Staphylococcus aureus, Salmonella, or Listeria Monocytogenes is determined according to ISO 6888-1, ISO 6579, and ISO 11290.

Preferably, the whey protein powder has:
- a total plate count of at most 10.000 cfu/g, more preferably at most 5.000 cfu/g, even more preferably at most 2000 cfu/g and most preferably at most 1000 cfu/g,
- a content of Enterobacteriaceae of at most 100 cfu/g, more preferably at most 50 cfu/g, even more preferably at most 20 cfu/g and most preferably 10 cfu/g,
- a content of Bacillus cereus of at most 100 cfu/g, more preferably at most 50 cfu/g, even more preferably at most 20 cfu/g and most preferably at most 100 cfu/g,
- a content of sulphur reducing Clostridia of at most 500 cfu/g, more preferably at most 300 cfu/g, even more preferably at most 200 cfu/g and most preferably at most 100 cfu/g, and
- a content of yeast and mould of at most 100 cfu/g, more preferably at most 50 cfu/g, even more preferably at most 20 cfu/g and most preferably at most 10 cfu/g.

The present inventors have found that some sensory problems of prior art high protein, acidified dairy products are caused by too high lactate contents. The inventors have furthermore found that the present invention advantageously results in less production of lactate as the whey protein powder used for protein enrichment is already acidic. One therefore avoids substantial re-fermentation to lower the pH and therefore avoids the production of lactate which is a fermentation by-product.

As described above, the inventors have furthermore found it advantageous that the whey protein powder has a relatively low content of lactate.

Thus, in some preferred embodiments of the invention the whey protein powder has a content of lactate of at most 1% w/w, more preferably at most 0.5% w/w, even more preferably at most 0.1% w/w, and most preferably at most 0.1% w/w.

The content of lactate is measured as the sum of lactate and lactic acid of the composition in question. This can be done by converting all lactate to lactic acid by acidification (using an HCl solution) and quantifying the total content of lactic acid by HPLC.

In some preferred embodiments of the invention the whey protein powder has a total content of low molecular weight carboxylic acids and their carboxylates of at most 1% w/w, more preferably at most 0.5% w/w, even more preferably at most 0.1% w/w, and most preferably at most 0.1% w/w.

In some preferred embodiments of the invention the whey protein powder has a content of fat of at most 5% w/w, more preferably at most 1% w/w, even more preferably at most 0.5% w/w, and most preferably at most 0.1% w/w.

In some preferred embodiments of the invention the whey protein powder has a content of carbohydrate of at most 40% w/w, more preferably at most 20% w/w, even more preferably at most 10% w/w, and most preferably at most 5% w/w.

In some preferred embodiments of the invention the whey protein powder has a content of carbohydrate of 0-40% w/w, more preferably 1-30% w/w, and most preferably 2-20% w/w.

In some preferred embodiments of the invention the whey protein powder has a content of carbohydrate of at most 4% w/w, more preferably at most 2% w/w, even more preferably at most 1% w/w, and most preferably at most 0.5% w/w.

Preferably, the whey protein powder has a content of carbohydrate of at most 0.3% w/w, more preferably at most 0.2% w/w, even more preferably at most 0.1% w/w, and most preferably at most 0.05% w/w.

In some preferred embodiments of the invention the whey protein powder has a particle size in the range of 10-500 micron, more preferably 20-400 micron, even more preferably 40-300 micron, and most preferably 70-150.

The inventors have observed that whey protein powder having the above particle size is more easily integrated into the first acidified dairy product when mixed directly.

The particle size of the whey protein powder is measured as the volume weighted average diameter, D[4,3], using a Malvern Mastersizer.

The whey protein powder preferably has a water content of at most 10% w/w, more preferably at most 7% w/w, even more preferably at most 6% w/w, and most preferably at most 5% w/w.

In some preferred embodiments of the invention the whey protein powder has:
- a pH in the range of 3.8-5.2,
- a protein content of 75-95% w/w,
- a weight ratio between the protein content and the sum of Ca and Mg of at least 200, and
- a carbohydrate content of at most 20% w/w, and
- a degree of protein denaturation of at most 15%,
the whey protein powder containing:
- 20-80% w/w BLG relative to total protein,
- 4-50% w/w ALA relative to total protein, and
- 0-40% w/w CMP relative to total protein.

In other preferred embodiments of the invention the whey protein powder has:
- a pH in the range of 4.0-5.0,
- a protein content of 75-95% w/w,
- a weight ratio between the protein content and the sum of Ca and Mg of at least 200, and
- a carbohydrate content of at most 20% w/w, and
- a degree of protein denaturation of at most 15%,
the whey protein powder containing:
- 20-80% w/w BLG relative to total protein,
- 4-50% w/w ALA relative to total protein, and
- 0-40% w/w CMP relative to total protein.

In other preferred embodiments of the invention the whey protein powder has:
- a pH in the range of 3.8-5.2,
- a protein content of 75-95% w/w,
- a fat content of at most 0.5% w/w,
- a weight ratio between the protein content and the sum of Ca and Mg of at least 200, and
- a carbohydrate content of at most 20% w/w, and
- a degree of protein denaturation of at most 15%,
the whey protein powder containing:
- 20-80% w/w BLG relative to total protein,
- 4-50% w/w ALA relative to total protein, and
- 0-40% w/w CMP relative to total protein.

In other preferred embodiments of the invention the whey protein powder has:
- a pH in the range of 4.0-5.0,
- a protein content of 75-95% w/w,
- a fat content of at most 0.5% w/w,
- a weight ratio between the protein content and the sum of Ca and Mg of at least 200,
- a carbohydrate content of at most 20% w/w, and
- a degree of protein denaturation of at most 15%,
the whey protein powder containing:
- 20-80% w/w BLG relative to total protein,
- 4-50% w/w ALA relative to total protein, and
- 0-40% w/w CMP relative to total protein.

In some preferred embodiments of the invention the whey protein powder has:
- a pH in the range of 3.8-5.2,
- a protein content of 75-95% w/w,
- a weight ratio between the protein content and the sum of Ca and Mg of at least 200,
- a carbohydrate content of at most 20% w/w,
- a degree of protein denaturation of at most 15%, and
- a total plate count of at most 1000 cfu/g,
the whey protein powder containing:
- 20-80% w/w BLG relative to total protein,
- 4-50% w/w ALA relative to total protein, and
- 0-40% w/w CMP relative to total protein.

In other preferred embodiments of the invention the whey protein powder has:
- a pH in the range of 4.0-5.0,
- a protein content of 75-95% w/w,
- a weight ratio between the protein content and the sum of Ca and Mg of at least 200, and
- a carbohydrate content of at most 20% w/w,
- a degree of protein denaturation of at most 15%, and
- a total plate count of at most 1000 cfu/g,
the whey protein powder containing:
- 20-80% w/w BLG relative to total protein,
- 4-50% w/w ALA relative to total protein, and
- 0-40% w/w CMP relative to total protein.

In other preferred embodiments of the invention the whey protein powder has:
- a pH in the range of 3.8-5.2,
- a protein content of 75-95% w/w,
- a fat content of at most 0.5% w/w,
- a weight ratio between the protein content and the sum of Ca and Mg of at least 200, and
- a carbohydrate content of at most 20% w/w,
- a degree of protein denaturation of at most 15%, and
- a total plate count of at most 1000 cfu/g,
the whey protein powder containing:
- 20-80% w/w BLG relative to total protein,
- 4-50% w/w ALA relative to total protein, and
- 0-40% w/w CMP relative to total protein.

In other preferred embodiments of the invention the whey protein powder has:
- a pH in the range of 4.0-5.0,
- a protein content of 75-95% w/w,
- a fat content of at most 0.5% w/w,
- a weight ratio between the protein content and the sum of Ca and Mg of at least 200,
- a carbohydrate content of at most 20% w/w,
- a degree of protein denaturation of at most 15%, and
- a total plate count of at most 1000 cfu/g,
the whey protein powder containing:
- 20-80% w/w BLG relative to total protein,
- 4-50% w/w ALA relative to total protein, and
- 0-40% w/w CMP relative to total protein.

In other preferred embodiments of the invention the whey protein powder has:
- a pH in the range of 4.0-5.0,
- a protein content of 75-95% w/w,
- a weight ratio between the protein content and the sum of Ca and Mg of at least 200, and
- a carbohydrate content of at most 0.5% w/w, and even more preferably at most 0.3% w/w, and
- a degree of protein denaturation of at most 15%,
the whey protein powder containing:
- 20-80% w/w BLG relative to total protein,
- 4-50% w/w ALA relative to total protein, and
- 0-40% w/w CMP relative to total protein.

In other preferred embodiments of the invention the whey protein powder has:
- a pH in the range of 3.8-5.2,
- a protein content of 75-95% w/w,
- a fat content of at most 0.5% w/w,
- a weight ratio between the protein content and the sum of Ca and Mg of at least 200, and
- a carbohydrate content of at most 0.5% w/w, and even more preferably at most 0.3% w/w, and
- a degree of protein denaturation of at most 15%,
the whey protein powder containing:
- 20-80% w/w BLG relative to total protein,
- 4-50% w/w ALA relative to total protein, and
- 0-40% w/w CMP relative to total protein.

In other preferred embodiments of the invention the whey protein powder has:
- a pH in the range of 4.0-5.0,
- a protein content of 75-95% w/w,
- a fat content of at most 0.5% w/w,
- a weight ratio between the protein content and the sum of Ca and Mg of at least 200,
- a carbohydrate content of at most 0.5% w/w, and even more preferably at most 0.3% w/w, and
- a degree of protein denaturation of at most 15%,
the whey protein powder containing:
- 20-80% w/w BLG relative to total protein,
- 4-50% w/w ALA relative to total protein, and
- 0-40% w/w CMP relative to total protein.

In some preferred embodiments of the invention the whey protein powder has:
- a pH in the range of 3.8-5.2,
- a protein content of 75-95% w/w,
- a weight ratio between the protein content and the sum of Ca and Mg of at least 200,
- a carbohydrate content of at most 0.5% w/w, and even more preferably at most 0.3% w/w, and
- a degree of protein denaturation of at most 15%, and
- a total plate count of at most 1000 cfu/g,
the whey protein powder containing:
- 20-80% w/w BLG relative to total protein,
- 4-50% w/w ALA relative to total protein, and
- 0-40% w/w CMP relative to total protein.

In other preferred embodiments of the invention the whey protein powder has:
- a pH in the range of 4.0-5.0,
- a protein content of 75-95% w/w,
- a weight ratio between the protein content and the sum of Ca and Mg of at least 200, and
- a carbohydrate content of at most 0.5% w/w, and even more preferably at most 0.3% w/w, and
- a degree of protein denaturation of at most 15%, and
- a total plate count of at most 1000 cfu/g,
the whey protein powder containing:
- 20-80% w/w BLG relative to total protein,
- 4-50% w/w ALA relative to total protein, and
- 0-40% w/w CMP relative to total protein.

In other preferred embodiments of the invention the whey protein powder has:
- a pH in the range of 3.8-5.2,
- a protein content of 75-95% w/w,
- a fat content of at most 0.5% w/w,
- a weight ratio between the protein content and the sum of Ca and Mg of at least 200, and
- a carbohydrate content of at most 0.5% w/w, and even more preferably at most 0.3% w/w, and
- a degree of protein denaturation of at most 15%, and
- a total plate count of at most 1000 cfu/g,
the whey protein powder containing:
- 20-80% w/w BLG relative to total protein,
- 4-50% w/w ALA relative to total protein, and
- 0-40% w/w CMP relative to total protein.

In other preferred embodiments of the invention the whey protein powder has:
- a pH in the range of 4.0-5.0,
- a protein content of 75-95% w/w,
- a fat content of at most 0.5% w/w,
- a weight ratio between the protein content and the sum of Ca and Mg of at least 200,
- a carbohydrate content of at most 0.5% w/w, and even more preferably at most 0.3% w/w, and
- a degree of protein denaturation of at most 15%, and
- a total plate count of at most 1000 cfu/g,
the whey protein powder containing:
- 20-80% w/w BLG relative to total protein,
- 4-50% w/w ALA relative to total protein, and
- 0-40% w/w CMP relative to total protein.

The whey protein powder can be produced in a number of different ways, which typically involve concentration, acidification and demineralisation of whey protein and subsequently gentle drying, preferably by spray-drying. It is particularly preferred that protein denaturing temperatures are avoided. It is furthermore preferred to subject the acidic whey protein stream to a combination of low temperature pasteurisation and microfiltration using a pore size of at most 0.4 micron to reduce the bacterial load of the protein stream or even sterilize the whey protein stream prior to spray-drying. If the whey protein stream prior to spray-drying is sterile and the spray-drying is performed under aseptic conditions a sterile whey protein powder is obtained.

Step c) involves combining the first acidified dairy product, the whey protein powder and optionally further ingredients to form a mixture having a protein content in the range of 10-30% w/w. Step c) may e.g. be performed by direct mixing of the whey protein powder with the first acidified dairy product. Alternatively step c) may be performed by indirect mixing meaning that the whey protein powder is mixed with one or more further ingredients before being mixed with the first acidified dairy product.

In some preferred embodiments of the present invention a significant number of the lactic acid bacteria of the first acidified dairy product are still viable in the high protein, acidified dairy product. Preferably, at least 25% of the lactic acid bacteria of the first acidified dairy product are still viable in the high protein, acidified dairy product, more preferably at least 50%, even more preferably at least 50% and most preferably at least 70%.

This requires gentle processing of the first acidified dairy product and subsequent streams containing the first acidified dairy product. It is particularly preferred to avoid heat-treatments that involve temperatures above 45 degrees C, more preferably above 42 degrees C, and most preferably above 40 degrees C.

Thus, in some preferred embodiments of the invention the whey protein powder is in the form of a powder when mixed with the first acidified dairy product, i.e. the whey protein powder is mixed directly with the first acidified dairy product.

In other preferred embodiments of the invention step c) involves preparing a premixture and preferably a premixture comprising the whey protein powder and an aqueous composition. The premixture is then mixed with the first acidified dairy product.

The premixture approach has the advantage that the premixture may be pasteurized to reduce the content of microorganisms and the pasteurized premixture can then be mixed with the first acidified dairy product. Thus in some preferred embodiments of the invention the premixture is pasteurized before being mixed with the first acidified dairy product.

The pasteurisation of the premixture preferably heats the premixture to a temperature in the range of 70-90 degrees C for a duration sufficient to reduce the content of native BLG by at most 30%, more preferably at most 25%, even more preferably at most 20%, and most preferably at most 15%.

In some preferred embodiments of the present invention the pasteurisation of the premixture heats the premixture to a temperature in the range of 70-90 degrees C for a duration sufficient to reduce the content of native BLG by 0.1-30%, more preferably 0.3-25%, even more preferably 0.5-20%, and most preferably 1-15%.

In other preferred embodiments of the present invention the pasteurisation of the premixture heats the premixture to a temperature in the range of 70-80 degrees C for a duration sufficient to reduce the content of native BLG by 0.1-10%, more preferably 0.3-8%, even more preferably 0.5-6%, and most preferably 1-4%.

In some preferred embodiments of the present invention the pasteurisation of the premixture heats the premixture to a temperature of at least 70 degrees C for a duration sufficient to provide a BLG denaturation which is at least the same as a pasteurisation at 72 degrees C for 15 seconds.

In other preferred embodiments of the present invention the pasteurisation of the premixture heats the premixture to a temperature in the range of 70-76 degrees C for a duration in the range of 10-60 seconds.

In the context of the present invention the term "aqueous composition" pertains to an edible composition that has a water content of at least 50% w/w, more preferably at least 60% w/w, even more preferably at least 70% w/w, and more preferably at least 80% w/w.

In some preferred embodiments of the invention the aqueous composition is water.

The inventors have found it advantageous to mix the whey protein powder with a viscous aqueous composition as the powder is more easily distributed and has less tendency to formation of lumps or entrapment of air bubbles.

Thus, in preferred embodiments of the invention the aqueous composition is a second acidified dairy product, which typically has an attractive viscosity for receiving the whey protein powder.

In some preferred embodiments of the invention the aqueous composition, and preferably the second acidified dairy product, has a total solids content of 5-40% w/w, more preferably 10-30% w/w, even more preferably 14-25% w/w, and most preferably 15-20% w/w.

In some preferred embodiments of the invention the aqueous composition, and preferably the second acidified dairy product, has a protein content of 2-12% w/w, more preferably 4-12% w/w, even more preferably 6-12% w/w, and most preferably 8-12% w/w.

In some preferred embodiments of the invention the aqueous composition, and preferably the second acidified dairy product, has a pH in the range of 3.9-5.1, more preferably 4.0-5.0, even more preferably 4.1-4.9, and most preferably 4.3-4.7.

Preferably, the aqueous composition is a second acidified dairy product having:
- a pH in the range of 3.8-5.2,
- a protein content in the range of 2-12% w/w, and
- a total solids content of 5-35% w/w.

More preferably, the aqueous composition is a second acidified dairy product having:
- a pH in the range of 4.0-5.0,
- a protein content in the range of 2-12% w/w, and
- a total solids content of 5-35% w/w.

In some preferred embodiments of the invention the premixture has a pH in the range of 3.9-5.1, more preferably 4.0-5.0, even more preferably 4.1-4.9, and most preferably 4.3-4.7.

In some preferred embodiments of the invention the whey protein powder has a pH, which is at most 1 pH unit higher or lower than the pH of the aqueous composition, more preferably at most 0.5 pH unit higher or lower, even more preferably at most 0.3 pH unit higher or lower and most preferred at most 0.2 pH unit higher or lower than the pH of the aqueous composition.

For example, the whey protein powder preferably has a pH, which is at most 1 pH unit higher or lower than the pH of the second acidified dairy product, more preferably at most 0.5 pH unit higher or lower, even more preferably at most 0.3 pH unit higher or lower and most preferred at most 0.2 pH unit higher or lower than the pH of the second acidified dairy product.

In some preferred embodiments of the invention the second acidified dairy product has the same composition as the first acidified dairy product and these may have been taken from the same acidified dairy product source. Alternatively, but also preferred, the second acidified dairy product may have a different composition relative to the first acidified dairy product.

If several acidified dairy products are used for preparing the premixture then the second acidified dairy product is the combination of several acidified dairy products.

Embodiments described in the context of the first acidified dairy product equally apply to the second acidified dairy product and will therefore not be repeated here.

The one or more further ingredients may e.g. be selected amongst sweeteners, flavours, salts, and other protein sources.

Preferably, the sweetener comprises or even consists of one or more sugar sweeteners. Preferably, the sugar sweetener comprises or even consists of sucrose, maltose, lactose, dextrose, glucose, fructose, galactose or a combination thereof.

Alternatively, but also preferred, the sweetener may comprise or even consist of one or more high intensity sweeteners.

Preferably, the high intensity sweetener comprises or even consists of Aspartame, Cyclamate, Sucralose, Acesulfame K, neotame, Saccharin, Neohesperidin dihydrochalcone, Stevia extract, Rebaudioside A, thaumatin, Brazzein, Glycyrrhyzic acid and/or its salts, Curculin, Monellin, Phyl-loducin, Rubusosides, Mabinlin, dulcoside A, dulcoside B, 15 siamenoside, monatin and its salts (monatin SS, RR, RS, SR) and combinations thereof.

Flavours may both be in the form of artificial flavours or natural flavour. In some preferred embodiments of the present invention the one or more further ingredients include a fruit preparation which contains both fruit and sweeteners, typically in the form of sucrose, glucose, galactose, and/or fructose. In other preferred embodiments of the present invention the one or more further ingredients include a vegetable preparation which contains an extract or puree of one or more vegetables and/or herbs.

In some preferred embodiments of the present invention the one or more further ingredients comprises sodium chloride and/or potassium chloride. The combination of sodium chloride and/or potassium chloride with a vegetable preparation is particularly preferred for cream cheese-type products or other low sweetness spreads.

Embodiments described in the context of the mixture, such as e.g. compositional features and methods of producing the mixture by direct mixing the whey protein powder with an acidified dairy product, equally apply to the premixture and will therefore not be repeated here. However, if the method involves the formation of a premixture, the premixture will be mixed with the first acidified dairy product.

The premixture preferably has a pH which is at most 1 pH unit higher or lower than the pH of the first acidified dairy product, more preferably at most 0.5 pH unit higher or lower, even more preferably at most 0.3 pH unit higher or lower and most preferred at most 0.2 pH unit higher or lower than the pH of the first acidified dairy product.

In some preferred embodiments of the present invention the premixture comprises:
- whey protein powder in an amount of 2-40% w/w, and
- aqueous composition in an amount of 50-95% w/w.

More preferably, the premixture comprises:
- whey protein powder in an amount of 4-40% w/w, and
- aqueous composition in an amount of 50-95% w/w.

Even more preferably, the premixture comprises:
- whey protein powder in an amount of 5-30% w/w, and
- aqueous composition in an amount of 60-95% w/w.

Most preferably, the premixture comprises:
- whey protein powder in an amount of 15-30% w/w, and
- aqueous composition dairy product in an amount of 60-80% w/w.

In some preferred embodiments of the present invention the premixture comprises:
- whey protein powder in an amount of 2-40% w/w, and
- second acidified dairy product in an amount of 50-95% w/w.

More preferably, the premixture comprises:
- whey protein powder in an amount of 4-40% w/w, and
- second acidified dairy product in an amount of 60-95% w/w.

Even more preferably, the premixture comprises:
- whey protein powder in an amount of 5-30% w/w, and
- second acidified dairy product in an amount of 70-95% w/w.

Most preferably, the premixture comprises:
- whey protein powder in an amount of 15-30% w/w, and
- second acidified dairy product in an amount of 60-80% w/w.

Preferably step c) involves:
- mixing the first acidified dairy product directly with the whey protein powder, or
- mixing the first acidified dairy product with a premixture prepared by mixing a second acidified dairy product with the whey protein powder.

In some preferred embodiments of the invention the mixture has a pH in the range of 3.9-5.1, more preferably 4.0-5.0, even more preferably 4.1-4.9, and most preferably 4.3-4.7.

In some preferred embodiments of the invention the mixture has a protein content in the range of 11-25% w/w, more preferably 12-20% w/w, even more preferably 13-19% w/w, and most preferably 14-18% w/w.

In other preferred embodiments of the invention the mixture has a protein content in the range of 20-30% w/w, more preferably 21-30% w/w, even more preferably 22-30% w/w, and most preferably 24-30% w/w.

In further preferred embodiments of the invention the mixture has a protein content in the range of 21-30% w/w, more preferably 22-29% w/w, even more preferably 23-28% w/w, and most preferably 24-27% w/w.

In some preferred embodiments of the invention the whey protein powder contributes with 5-90% w/w of the protein of the mixture, more preferably 20-70% w/w, even more preferably 30-60% w/w, and most preferably 40-50% w/w.

In other preferred embodiments of the invention the whey protein powder contributes with 20-90% w/w of the protein of the mixture, more preferably 30-90% w/w, even more preferably 40-90% w/w and most preferably 50-90% w/w.

In further preferred embodiments of the invention the whey protein powder contributes with 5-60% w/w of the protein of the mixture, more preferably 15-50% w/w, even more preferably 20-45% w/w and most preferably 25-40% w/w.

In some preferred embodiments of the invention the first acidified dairy product contributes with 10-80% w/w of the protein of the mixture, more preferably 20-70% w/w, even more preferably 30-60% w/w and most preferably 40-50% w/w.

In some preferred embodiments of the invention:
- the whey protein powder contributes with 5-90% of the protein of the mixture, and
- the first and second acidified dairy products have a combined protein contribution of 5-90% of the protein of the mixture.

The combined protein contribution of the first and second acidified dairy product does not require the presence of the second acidified dairy product but if the second acidified dairy product is used its protein contribution must be added to the contribution of the first acidified dairy product. The first acidified dairy product, however is always present and always contributes with protein.

More preferably:
- the whey protein powder contributes with 50-90% of the protein of the mixture, and
- the first and second acidified dairy products have a combined protein contribution of 5-45% of the protein of the mixture.

Even more preferably:
- the whey protein powder contributes with 60-85% of the protein of the mixture, and
- the first and second acidified dairy products have a combined protein contribution of10-35% of the protein of the mixture.

Most more preferably:
- the whey protein powder contributes with 70-80% of the protein of the mixture, and
- the first and second acidified dairy products have a combined protein contribution of 15-25% of the protein of the mixture.

In other preferred embodiments of the invention:
- the whey protein powder contributes with 30-60% of the protein of the mixture, and
- the first and second acidified dairy products have a combined protein contribution of 30-60% of the protein of the mixture.

In some preferred embodiments of the present invention the mixture comprises:
- whey protein powder in an amount of 2-40% w/w, and
- first acidified dairy product in an amount of 50-95% w/w.

More preferably, the mixture comprises:
- whey protein powder in an amount of 4-40% w/w, and
- first acidified dairy product in an amount of 60-95% w/w.

Even more preferably, the mixture comprises:
- whey protein powder in an amount of 5-30% w/w, and
- first acidified dairy product in an amount of 70-95% w/w.
-

Most preferably, the mixture comprises:
- whey protein powder in an amount of 15-30% w/w, and
- first acidified dairy product in an amount of 60-80% w/w.

If the mixture of step c) is prepared by forming a premixture the mixture preferably comprises second acidified dairy product in addition to the first acidified dairy product.

In some preferred embodiments of the present invention, the mixture comprises:
- whey protein powder in an amount of 5-10% w/w,
- first acidified dairy product in an amount of 60-73% w/w, and
- second acidified dairy product in an amount of 17-23% w/w.

In some preferred embodiments of the present invention, the mixture comprises:
- whey protein powder in an amount of 5-15% w/w,
- first acidified dairy product in an amount of 40-55% w/w, and
- second acidified dairy product in an amount of 17-43% w/w.

In some preferred embodiments of the invention the mixture has a total solids content of 5-35% w/w, more preferably 10-30% w/w, even more preferably 15-25% w/w, and most preferably 17-20% w/w.

In some preferred embodiments of the invention the mixture has a carbohydrate content in the range of 1-15% w/w, more preferably 2-12% w/w, even more preferably 2-10% w/w, and most preferably 3-10% w/w.

In some preferred embodiments of the invention the mixture has a fat content in the range of 0-10% w/w, more preferably 0-6% w/w, even more preferably 0-5% w/w, and most preferably 0-3.5% w/w.

In some preferred embodiments of the invention the mixture has a fat content in the range of 5-15% w/w, more preferably 6-14% w/w, even more preferably 7-13% w/w, and most preferably 8-11% w/w.

In some preferred embodiments of the invention the mixture has a fat content in the range of 15-30% w/w, more preferably 18-29% w/w, even more preferably 20-28% w/w, and most preferably 22-27% w/w.

In some preferred embodiments of the invention the mixture has a water content in the range of 65-95% w/w, more preferably 70-90% w/w, even more preferably 75-85% w/w, and most preferably 80-83% w/w.

In some preferred embodiments of the invention the mixture has a viscosity in the range of 10-200 cP at 5 degrees C.

In other preferred embodiments of the invention the mixture has a viscosity in the range of 201-2500 cP at 5 degrees C.

In further preferred embodiments of the invention the mixture has a viscosity in the range of 2501-40000 cP at 5 degrees C.

In even further preferred embodiments of the invention the mixture has a texture of 4000-40000 force area (g*sec) at 12 degrees C.

In some preferred embodiments of the invention the mixture has a content of lactate of at most 1.0% w/w, more preferably at most 0.9% w/w, even more preferably at most 0.8% w/w, and most preferably at most 0.6% w/w.

In other preferred embodiments of the invention the mixture has a content of lactate of 0.2-1.0% w/w, more preferably 0.3-0.9% w/w, even more preferably 0.3-0.8% w/w, and most preferably 0.4-0.6% w/w.

In some preferred embodiments of the invention the mixture has a total content of low molecular weight carboxylic acids and their carboxylates of at most 1% w/w, more preferably at most 0.9% w/w, even more preferably at most 0.8% w/w, and most preferably at most 0.6% w/w.

In other preferred embodiments of the invention the mixture has a total content of low molecular weight carboxylic acids and their carboxylates of 0.2-1.0% w/w, more preferably 0.3-0.9% w/w, even more preferably 0.3-0.8% w/w, and most preferably 0.4-0.6% w/w.

In some preferred embodiments of the invention the mixture has a degree of protein denaturation of at least 80%, more preferably at least 85%, even more preferably at least 90%, and most preferably at least 95%.

A benefit of many preferred embodiments of the invention is that a considerable amount of the protein is in undenatured state and therefore does not contribute much less to the overall viscosity of the mixture and high protein, acidified dairy product than if it had been denatured.

Thus in some preferred embodiments of the invention the mixture has a degree of protein denaturation of in the range of 10-80%, more preferably 30-70%, even more preferably 35-65%, and most preferably 40-60%.

In further preferred embodiments of the invention the mixture has a degree of protein denaturation of in the range of 10-70%, more preferably 15-50%, even more preferably 15-30%, and most preferably 15-25%.

In some preferred embodiments of the invention the mixture has a content of LAB of at least 1*10⁶ cfu/g, more preferably at least 1*10⁷ cfu/g, even more preferably 1*10⁸ cfu/g, and most preferably 1*10⁹ cfu/g.

Preferably, the mixture has a content of LAB of 1*10⁶ - 9*10¹⁰ cfu/g, more preferably 1*10⁷ - 7*10¹⁰ cfu/g, even more preferably 1*10⁸ - 5*10¹⁰, and most preferably 1*10⁹ - 3*10¹⁰ cfu/g.

In some preferred embodiments of the present invention the mixture has a weight ratio between whey protein and casein in the range of 5:95-100:0, more preferably 50:50-95:5, even more preferably 60:40-90:10, and most preferably 65:35-85:15.

The present inventors have found that an antifoaming agent advantageously can be mixed into the liquid to which the whey protein powder is to be added. An antifoaming agent reduces the risk of undesired trapping of air bubbles and of undesired foam formation.

In some preferred embodiments of the invention, an antifoaming agent is mixed with the first acidified dairy product prior to direct addition of the whey protein powder to the first acidified dairy product.

In other preferred embodiments of the invention, an antifoaming agent is mixed with, or already forms part of, the aqueous composition prior to the direct addition of the whey protein powder. In the preferred embodiments where the aqueous composition is a second acidified dairy product, the antifoaming agent is mixed with, or already forms part of, the second acidified dairy product prior to the direct addition of the whey protein powder.

Antifoaming agents, also known as defoamers, are known to the skilled person. While food-acceptable antifoaming agents may be used, it is presently preferred to use a silicone-containing antifoaming agent, such as e.g. MAGRABAR^{®} PD-702.

The antifoaming agent is typically used in the smallest dosage required to avoid foam-formation during the production, preferably in an amount of 0.001-0.3% w/w, and more preferably 0.01-0.2% w/w, and most preferably 0.02-0.1% w/w.

Step d) is optional and involves combining the mixture with one or more additional ingredients, typically sweetener and/ flavour and/or fruit preparation.

The one or more additional ingredients may e.g. be selected amongst sweeteners, flavours, salts, and other protein sources.

Preferably, the sweetener comprises or even consists of one or more sugar sweeteners.

Preferably, the sugar sweetener comprises or even consists of sucrose, maltose, lactose, dextrose, glucose, fructose, galactose or a combination thereof.

Alternatively, but also preferred, the sweetener may comprise or even consist of one or more high intensity sweeteners.

Preferably, the high intensity sweetener comprises or even consists of Aspartame, Cyclamate, Sucralose, Acesulfame K, neotame, Saccharin, Neohesperidin dihydrochalcone, Stevia extract, Rebaudioside A, thaumatin, Brazzein, Glycyrrhyzic acid and/or its salts, Curculin, Monellin, Phyl-loducin, Rubusosides, Mabinlin, dulcoside A, dulcoside B, 15 siamenoside, monatin and its salts (monatin SS, RR, RS, SR) and combinations thereof.

Flavours may both be in the form of artificial flavours or natural flavour. In some preferred embodiments of the present invention the one or more additional ingredients include a fruit preparation which contains both fruit and sweeteners, typically in the form of sucrose, glucose, galactose, and/or fructose. In other preferred embodiments of the present invention the one or more additional ingredients include a vegetable preparation which contains an extract or puree of one or more vegetables and/or herbs.

In some preferred embodiments of the present invention the one or more additional ingredients comprise sodium chloride and/or potassium chloride. The combination of sodium chloride and/or potassium chloride with a vegetable preparation is particularly preferred for cream cheese-type products or other low sweetness spreads.

If the method comprises step d) the mixture of step c) preferably contributes with at least 70% w/w of the high protein, acidified dairy product, more preferably at least 75% w/w, even more preferably at least 80% w/w, and most preferably least most 85% w/w of the high protein, acidified dairy product.

In preferred embodiments of the invention, when the method comprises step d), the mixture of step c) preferably contribute with 70-99% w/w of the high protein, acidified dairy product, more preferably 75-98% w/w, even more preferably 80-97% w/w, and most preferably 85-96% w/w of the high protein, acidified dairy product.

If the method does not include step d) the high protein, acidified dairy product is the mixture obtained from step c). If the method includes step d) the high protein, acidified dairy product is the combination of the mixture and one or more additional ingredients obtained from step d).

The method may furthermore involve a step of pasteurising the mixture and/or the combination of the mixture and the additional ingredients to improve the shelf-life of the high protein, acidified dairy product.

Step e) is optional and involves filling the mixture or a combination of the mixture and one or more additional ingredients into suitable containers.

Useful examples of container types are e.g. a beaker, a pot, a glass, a bottle, a carton, a brick, a pouch and/or a bag.

In some preferred embodiments of the invention the method comprises step e), for example if the high protein, acidified dairy product is intended for direct consumption.

However, in other preferred embodiments of the invention the method does not contain step e), for example if the high protein, acidified dairy product is to be used as an ingredient for another food product.

It is often preferred to apply homogenisation after the whey protein powder has been added to a liquid composition and preferably after the powder has been allowed to hydrate.

In some preferred embodiments of the present invention step c) provides the mixture by subjecting the combination of the whey protein powder, the first acidified dairy product and optionally the one or more further ingredients to a homogenisation step. The inventors have found that the best microstructure and long term stability of the end product is obtained by limiting the pressure drop used for homogenisation to at most 300 bar, more preferably at most 200 bar, even more preferably at most 50 bar, and most preferably at most 30 bar.

If step c) involves the formation of a premixture comprising the whey protein powder and an aqueous composition, such as e.g. a second acidified dairy product, it is preferred that the preparation of the premixture involves subjecting the combination of the whey protein powder and the aqueous composition to a homogenisation step. Again it is advantageous to limit the pressure drop used for homogenisation to at most 300 bar, more preferably at most 200 bar, even more preferably at most 50 bar and most preferably at most 30 bar.

In some preferred embodiments of the present invention the method furthermore comprises a step of pasteurising the mixture or the combination of the mixture and additional ingredients.

The pasteurisation preferably heats the composition to a temperature in the range of 70-90 degrees C for a duration sufficient to reduce the content of native BLG by at most 30%, more preferably at most 25%, even more preferably at most 20%, and most preferably at most 15%.

In some preferred embodiments of the present invention the pasteurisation of the mixture or the combination of the mixture and additional ingredients heats the composition to a temperature in the range of 70-90 degrees C for a duration sufficient to reduce the content of native BLG by 0-30%, more preferably 1-25%, even more preferably 2-20%, and most preferably 3-15%.

In some preferred embodiments of the present invention the pasteurisation preferably heats the mixture or the combination of the mixture and additional ingredients to a temperature in the range of 70-90 degrees C for a duration sufficient to reduce the content of native BLG by 0.1-30%, more preferably 0.3-25%, even more preferably 0.5-20%, and most preferably 1-15%.

In other preferred embodiments of the present invention the pasteurisation of the mixture heats the mixture or the combination of the mixture and additional ingredients to a temperature in the range of 70-80 degrees C for a duration sufficient to reduce the content of native BLG by 0.1-10%, more preferably 0.3-8%, even more preferably 0.5-6%, and most preferably 1-4%.

In some preferred embodiments of the present invention the pasteurisation of the mixture heats the mixture or the combination of the mixture and additional ingredients to a temperature of at least 70 degrees C for a duration sufficient to provide a BLG denaturation which is at least the same as a pasteurisation at 72 degrees C for 15 seconds.

In other preferred embodiments of the present invention the pasteurisation of the mixture heats the mixture or the combination of the mixture and additional ingredients to a temperature in the range of 70-76 degrees C for a duration in the range of 10-60 seconds.

When pasteurisation is applied, a high protein, acidified dairy product having a shelf-life of at least 4 month at ambient storage is typically obtained.

In some preferred embodiments of the invention, the mixture or the combination of the mixture and additional ingredients is preferably pasteurized to provide the high protein, acidified dairy product with a shelf-life at ambient temperature of at least 4 month, more preferably at least 6 months even more preferably at least 8 months, and most preferably at least 10 months.

Another aspect of the invention pertains to a high protein, acidified dairy product having:
- a pH in the range of 3.8-5.2,
- a protein content in the range of 10-30% w/w, and
- a total solids content of 5-40% w/w.

In some preferred embodiments of the invention the high protein, acidified dairy product has a pH in the range of 3.9-5.1, more preferably 4.0-5.0, even more preferably 4.1-4.9, and most preferably 4.3-4.7.

In some preferred embodiments of the invention the high protein, acidified dairy product has a protein content in the range of 11-25% w/w, more preferably 12-20% w/w, even more preferably 13-19% w/w, and most preferably 14-18% w/w.

In other preferred embodiments of the invention the high protein, acidified dairy product has a protein content in the range of 20-30% w/w, more preferably 21-30% w/w, even more preferably 22-30% w/w, and most preferably 24-30% w/w.

In further preferred embodiments of the invention the high protein, acidified dairy product has a protein content in the range of 21-30% w/w, more preferably 22-29% w/w, even more preferably 23-28% w/w, and most preferably 24-27% w/w.

In some preferred embodiments of the invention the whey protein powder contributes with 5-90% w/w of the protein of the high protein, acidified dairy product, more preferably 20-70% w/w, even more preferably 30-60% w/w and most preferably 40-50% w/w.

In other preferred embodiments of the invention the whey protein powder contributes with 20-90% w/w of the protein of the high protein, acidified dairy product, more preferably 30-90% w/w, even more preferably 40-90% w/w and most preferably 50-90% w/w.

In further preferred embodiments of the invention the whey protein powder contributes with 5-60% w/w of the protein of the high protein, acidified dairy product, more preferably 15-50% w/w, even more preferably 20-45% w/w and most preferably 25-40% w/w.

In some preferred embodiments of the invention the first acidified dairy product contributes with 10-80% w/w of the protein of the high protein, acidified dairy product, more preferably 20-70% w/w, even more preferably 30-60% w/w and most preferably 40-50% w/w.

In some preferred embodiments of the invention:
- the whey protein powder contributes with 5-90% of the protein of the high protein, acidified dairy product, and
- the first and second acidified dairy products have a combined protein contribution of 5-90% of the protein of the high protein, acidified dairy product.

The combined protein contribution of the first and second acidified dairy product does not require the presence of the second acidified dairy product but if the second acidified dairy product is used its protein contribution must be added to the contribution of the first acidified dairy product. The first acidified dairy product, however, is always present and always contributes with protein.

More preferably:
- the whey protein powder contributes with 50-90% of the protein of the high protein, acidified dairy product, and
- the first and second acidified dairy products have a combined protein contribution of 5-45% of the protein of the high protein, acidified dairy product.

Even more preferably:
- the whey protein powder contributes with 60-85% of the protein of the high protein, acidified dairy product, and
- the first and second acidified dairy products have a combined protein contribution of 10-35% of the protein of the high protein, acidified dairy product.

Most more preferably:
- the whey protein powder contributes with 70-80% of the protein of the high protein, acidified dairy product, and
- the first and second acidified dairy products have a combined protein contribution of 15-25% of the protein of the high protein, acidified dairy product.

In other preferred embodiments of the invention:
- the whey protein powder contributes with 30-60% of the protein of the high protein, acidified dairy product, and
- the first and second acidified dairy products have a combined protein contribution of 30-60% of the protein of the high protein, acidified dairy product.

The protein of the high protein, acidified dairy product is preferably milk derived mammal milk and preferably from one or more of the following ruminants: cow, sheep, goat, buffalo, camel, llama, mare and/or deer. Milk protein derived from bovine (cow) milk is particularly preferred.

In some preferred embodiments of the present invention the high protein, acidified dairy product has a weight ratio between whey protein and casein in the range of 5:95-100:0, more preferably 50:50-95:5, even more preferably 60:40-90:10, and most preferably 65:35-85:15.

In some preferred embodiments of the invention the high protein, acidified dairy product has a total solids content of 5-35% w/w, more preferably 10-30% w/w, even more preferably 15-25% w/w, and most preferably 17-20% w/w.

In some preferred embodiments of the invention the high protein, acidified dairy product has a carbohydrate content in the range of 1-15% w/w, more preferably 2-12% w/w, even more preferably 2-10% w/w, and most preferably 3-10% w/w.

In some preferred embodiments of the invention the high protein, acidified dairy product has a fat content in the range of 0-10% w/w, more preferably 0-6% w/w, even more preferably 0-5% w/w, and most preferably 0-3.5% w/w. It may for example be preferred that the high protein, acidified dairy product is a Greek yoghurt, and preferably a low fat Greek yoghurt.

In some preferred embodiments of the invention the high protein, acidified dairy product has a fat content in the range of 5-15% w/w, more preferably 6-14% w/w, even more preferably 7-13% w/w, and most preferably 8-11% w/w. It may for example be preferred that the high protein, acidified dairy product is a high fat Greek yoghurt.

In some preferred embodiments of the invention the high protein, acidified dairy product has a fat content in the range of 15-30% w/w, more preferably 18-29% w/w, even more preferably 20-28% w/w, and most preferably 22-27% w/w. It may for example be preferred that the high protein, acidified dairy product is a cream cheese.

In some preferred embodiments of the invention the high protein, acidified dairy product has a water content in the range of 65-95% w/w, more preferably 70-90% w/w, even more preferably 75-85% w/w, and most preferably 80-83% w/w.

In some preferred embodiments of the invention the high protein, acidified dairy product has a viscosity in the range of 10-200 cP at 5 degrees C. This viscosity range is for example preferred for high protein, acidified dairy product in the form of a drinking yoghurt.

In some preferred embodiments of the invention the high protein, acidified dairy product has a viscosity in the range of 201-2500 cP at 5 degrees C. This viscosity range is for example preferred for high protein, acidified dairy product in the form of a stirred yoghurt.

In further preferred embodiments of the invention the high protein, acidified dairy product has a viscosity in the range of 2501-40000 cP at 5 degrees C. This viscosity range is for example preferred for high protein, acidified dairy product in the form of a cream cheese or dairy spread.

In even further preferred embodiments of the invention the mixture has a texture of 4000-40000 force area (g*sec) at 12 degrees C. This texture range is for example preferred for high protein, acidified dairy product in the form of a cream cheese or dairy spread.

The present inventors have found that a benefit of the present invention is that the high protein, acidified dairy product contains less lactate than prior art high protein, acidified dairy products.

In some preferred embodiments of the invention the high protein, acidified dairy product has a content of lactate of at most 1.0% w/w, more preferably at most 0.9% w/w, even more preferably at most 0.8% w/w, and most preferably at most 0.6% w/w.

In some preferred embodiments of the invention the high protein, acidified dairy product has a content of lactate of 0.2-1.0% w/w, more preferably 0.3-0.9% w/w, even more preferably 0.3-0.8% w/w, and most preferably 0.4-0.6% w/w.

In some preferred embodiments of the invention the high protein, acidified dairy product has a total content of low molecular weight carboxylic acids and their carboxylates of at most 1% w/w, more preferably at most 0.9% w/w, even more preferably at most 0.8% w/w, and most preferably at most 0.6% w/w.

In other preferred embodiments of the invention the high protein, acidified dairy product has a total content of low molecular weight carboxylic acids and their carboxylates of 0.2-1.0% w/w, more preferably 0.3-0.9% w/w, even more preferably 0.3-0.8% w/w, and most preferably 0.4-0.6% w/w.

In some preferred embodiments of the invention the high protein, acidified dairy product has a degree of protein denaturation of at least 80%, more preferably at least 85%, even more preferably at least 90%, and most preferably at least 95%.

In other preferred embodiments of the invention the high protein, acidified dairy product has a degree of protein denaturation of in the range of 10-80%, more preferably 30-70%, even more preferably 35-65%, and most preferably 40-60%.

In further preferred embodiments of the invention the high protein, acidified dairy product has a degree of protein denaturation of in the range of 10-70%, more preferably 15-50%, even more preferably 15-30%, and most preferably 15-25%.

An advantage of the present invention is that it makes it feasible to produce high protein, acidified dairy products having a considerable content of living lactic acid bacteria (LAB).

In some preferred embodiments of the invention the high protein, acidified dairy product has a content of LAB of at least 1*10⁶ cfu/g, more preferably at least 1*10⁷ cfu/g, even more preferably 1*10⁸ cfu/g, and most preferably 1*10⁹ cfu/g.

Preferably the high protein, acidified dairy product has a content of LAB of 1*10⁶ - 9*10¹⁰ cfu/g, more preferably 1*10⁷ - 7*10¹⁰ cfu/g, even more preferably 1*10⁸ - 5*10¹⁰, and most preferably 1*10⁹ - 3*10¹⁰ cfu/g.

In other preferred embodiments of the invention the high protein, acidified dairy product has a shelf-life at ambient temperature of at least 4 month, more preferably at least 6 months even more preferably at least 8 months, and most preferably at least 10 months.

In some preferred embodiments of the invention the high protein, acidified dairy product of the invention is obtainable by the method described herein.

Yet an aspect of the invention pertains to the whey protein powder as described herein, i.e. having:
- a pH in the range of 3.8-5.2,
- a protein content of at least 50% w/w
- a weight ratio between the protein content and the sum of Ca and Mg of at least 200,
- preferably, a combined content of carbohydrate and protein of at least 80% w/w, and
- preferably, a degree of protein denaturation of at most 15%.

Further embodiments of the whey protein powder are described above.

Yet an aspect of the invention pertains to the use of the whey protein powder as described herein as a food ingredient, preferably for:
- enriching the protein content of a food product, preferably an acidified dairy product, and/or
- increasing the content of native whey protein of a food product, preferably an acidified dairy product, and/or
- improving the taste of high protein, acidified dairy products, and/or
- improving the stability of high protein, acidified dairy products, and/or
- improving the texture of high protein, acidified dairy products.

Preferred numbered embodiments of the invention are described in the following:
Numbered embodiment 1. A method of producing a high protein, acidified dairy product comprising the steps of:
   a) providing a first acidified dairy product having:
      - a pH in the range of 3.8-5.2,
      - a protein content in the range of 2-12% w/w, and
      - a total solids content of 5-35% w/w,
   b) providing a whey protein powder having:
      - a pH in the range of 3.8-5.2,
      - a protein content of at least 50% w/w
      - a weight ratio between the protein content and the sum of Ca and Mg of at least 200,
      - preferably, a combined content of carbohydrate and protein of at least 80% w/w,
         and
      - preferably, a degree of protein denaturation of at most 15%,
   c) combining the first acidified dairy product, the whey protein powder and optionally one or more further ingredients to form a mixture having a protein content in the range of 10-30% w/w,
   d) optionally, combining the mixture with one or more additional ingredients, and
   e) optionally, filling the mixture or a combination of the mixture and one or more additional ingredients into suitable containers,
   wherein the high protein, acidified dairy product is the mixture obtained from step c) or the combination of the mixture and one or more additional ingredients.
Numbered embodiment 2. The method according to Numbered embodiment 1 wherein the first acidified dairy product has a pH in the range of 3.9-5.1, more preferably 4.0-5.0, even more preferably 4.1-4.9, and most preferably 4.3-4.7.
Numbered embodiment 3. The method according to any one of the preceding Numbered embodiments wherein the first acidified dairy product has a protein content in the range of 2-10% w/w, more preferably 2-8% w/w, even more preferably 2-6% w/w, and most preferably 2-4% w/w.
Numbered embodiment 4. The method according to any one of the preceding Numbered embodiments wherein the first acidified dairy product has a protein content in the range of 4-12% w/w, more preferably 6-12% w/w, even more preferably 8-12% w/w, and most preferably 8-11% w/w.
Numbered embodiment 5. The method according to any one of the preceding Numbered embodiments wherein the first acidified dairy product has a total solids content of 5-35% w/w, more preferably 10-30% w/w, even more preferably 15-25% w/w, and most preferably 17-20% w/w.
Numbered embodiment 6. The method according to any one of the preceding Numbered embodiments wherein the first acidified dairy product has a carbohydrate content in the range of 1-15% w/w, more preferably 2-12% w/w, even more preferably 2-10% w/w, and most preferably 3-10% w/w.
Numbered embodiment 7. The method according to any one of the preceding Numbered embodiments wherein the first acidified dairy product has a fat content in the range of 0-10% w/w, more preferably 0-6% w/w, even more preferably 0-5% w/w, and most preferably 0-3.5% w/w.
Numbered embodiment 8. The method according to any one of the preceding Numbered embodiments wherein the first acidified dairy product has a fat content in the range of 5-15% w/w, more preferably 6-14% w/w, even more preferably 7-13% w/w, and most preferably 8-11% w/w.
Numbered embodiment 9. The method according to any one of the preceding Numbered embodiments wherein the first acidified dairy product has a fat content in the range of 15-30% w/w, more preferably 18-29% w/w, even more preferably 20-28% w/w, and most preferably 22-27% w/w.
Numbered embodiment 10. The method according to any one of the preceding Numbered embodiments wherein the first acidified dairy product has a water content in the range of 65-95% w/w, more preferably 70-90% w/w, even more preferably 75-85% w/w, and most preferably 80-83% w/w.
Numbered embodiment 11. The method according to any one of the preceding Numbered embodiments wherein the first acidified dairy product has a viscosity in the range of 10-200 cP at 5 degrees C.
Numbered embodiment 12. The method according to any one of the preceding Numbered embodiments wherein the first acidified dairy product has a viscosity in the range of 201-5000 cP at 5 degrees C.
Numbered embodiment 13. The method according to any one of the preceding Numbered embodiments wherein the first acidified dairy product has a texture of 4000-40000 force area (g*sec) at 12 degrees C.
Numbered embodiment 14. The method according to any one of the preceding Numbered embodiments wherein the first acidified dairy product has a content of lactate of at most 1.0% w/w, more preferably at most 0.9% w/w, even more preferably at most 0.8% w/w, and most preferably at most 0.6% w/w.
Numbered embodiment 15. The method according to any one of the preceding Numbered embodiments wherein the first acidified dairy product has a content of lactate of 0.2-1.0% w/w, more preferably 0.3-0.9% w/w, even more preferably 0.3-0.8% w/w, and most preferably 0.4-0.6% w/w.
Numbered embodiment 16. The method according to any one of the preceding Numbered embodiments wherein the first acidified dairy product has a degree of protein denaturation of at least 80%, more preferably at least 85%, even more preferably at least 90%, and most preferably at least 95%.
Numbered embodiment 17. The method according to any one of the preceding Numbered embodiments wherein the first acidified dairy product has a content of LAB of at least 1*10⁶ cfu/g, more preferably at least 1*10⁷ cfu/g, even more preferably 1*10⁸ cfu/g, and most preferably 1*10⁹ cfu/g.
Numbered embodiment 18. The method according to any one of the preceding Numbered embodiments wherein the first acidified dairy product has a content of LAB of 1*10⁶ - 9*10¹⁰ cfu/g, more preferably 1*10⁷ - 7*10¹⁰ cfu/g, even more preferably 1*10⁸ - 5*10¹⁰, and most preferably 1*10⁹ - 3*10¹⁰ cfu/g.
Numbered embodiment 19. The method according to any one of the preceding Numbered embodiments wherein the whey protein powder has a pH in the range of 3.9-5.1, more preferably 4.0-5.0, even more preferably 4.1-4.9, and most preferably 4.3-4.7.
Numbered embodiment 20. The method according to any one of the preceding Numbered embodiments wherein the whey protein powder has a pH which is at most 1 pH unit higher or lower than the pH of the first acidified dairy product, more preferably at most 0.7 pH unit higher or lower, even more preferably at most 0.5 pH unit higher or lower and most preferred at most 0.3 pH unit higher or lower than the pH of the first acidified dairy product.
Numbered embodiment 21. The method according to any one of the preceding Numbered embodiments wherein the whey protein powder has a protein content of at least 50% w/w, more preferably at least 70% w/w, even more preferably at least 80% w/w, and most preferably at least 82% w/w.
Numbered embodiment 22. The method according to any one of the preceding Numbered embodiments wherein the whey protein powder has a protein content of at least 86% w/w, more preferably at least 88% w/w, even more preferably at least 90% w/w, and most preferably at least 92% w/w.
Numbered embodiment 23. The method according to any one of the preceding Numbered embodiments wherein the whey protein powder has a combined content of carbohydrate and protein of at least 80% w/w, more preferably at least 85% w/w, even more preferably at least 90% w/w, and most preferably at least 92% w/w.
Numbered embodiment 24. The method according to any one of the preceding Numbered embodiments wherein the whey protein powder has a weight ratio between the protein content and the sum of Ca and Mg of at least 300, more preferably at least 400, even more preferably at least 600, and most preferably at least 800.
Numbered embodiment 25. The method according to any one of the preceding Numbered embodiments wherein the whey protein powder has a weight ratio between the protein content and the sum of Ca and Mg of at least 1000, more preferably at least 1400, even more preferably at least 1800, and most preferably at least 2000.
Numbered embodiment 26. The method according to any one of the preceding Numbered embodiments wherein the whey protein powder has a weight ratio between the protein content and the sum of Ca and Mg of 200-10000, more preferably 600-6000, and most preferably 800-4000.
Numbered embodiment 27. The method according to any one of the preceding Numbered embodiments wherein the whey protein powder has a weight ratio between the protein content and the sum of Ca and Mg of 1000-10000, more preferably 1400-6000, even more preferably 1800-5000, and most preferably 2000-4000.
Numbered embodiment 28. The method according to any one of the preceding Numbered embodiments wherein the whey protein powder has a weight ratio between the protein content and the sum of K and Na of at least 50, more preferably at least 60, even more preferably at least 70, and most preferably at least 90.
Numbered embodiment 29. The method according to any one of the preceding Numbered embodiments wherein the whey protein powder has a weight ratio between the protein content and the sum of K and Na of 50-2000, more preferably 60-1500, even more preferably 70-1000, and most preferably 90-1000.
Numbered embodiment 30. The method according to any one of the preceding Numbered embodiments wherein the whey protein powder has a degree of protein denaturation of at most 15%, more preferably at most 12%, even more preferably at most 10%, and most preferably at most 8%.
Numbered embodiment 31. The method according to any one of the preceding Numbered embodiments wherein the whey protein powder has a total plate count of at most 10.000 cfu/g, more preferably at most 5.000 cfu/g, even more preferably at most 2000 cfu/g/ and most preferably at most 1000 cfu/g.
Numbered embodiment 32. The method according to any of the preceding Numbered embodiments wherein the whey protein powder has a content of Enterobacteriaceae of at most 100 cfu/g, more preferably at most 50 cfu/g, even more preferably at most 20 cfu/g/ and most preferably 10 cfu/g.
Numbered embodiment 33. The method according to any one of the preceding Numbered embodiments wherein the whey protein powder has a content of Enterobacteriaceae of at most 8 cfu/g, more preferably at most 5 cfu/g, even more preferably at most 1 cfu/g/ and most preferably no cfu/g.
Numbered embodiment 34. The method according to any one of the preceding Numbered embodiments wherein the whey protein powder has a content of Bacillus cereus of at most 100 cfu/g, more preferably at most 50 cfu/g, even more preferably at most 20 cfu/g/ and most preferably at most 100 cfu/g.
Numbered embodiment 35. The method according to any one of the preceding Numbered embodiments wherein the whey protein powder has a content of sulphur reducing Clostridia of at most 500 cfu/g, more preferably at most 300 cfu/g, even more preferably at most 200 cfu/g/ and most preferably at most 100 cfu/g.
Numbered embodiment 36. The method according to any one of the preceding Numbered embodiments wherein the whey protein powder has a content of Yeast and mould of at most 100 cfu/g, more preferably at most 50 cfu/g, even more preferably at most 20 cfu/g/ and most preferably at most 10 cfu/g.
Numbered embodiment 37. The method according to any one of the preceding Numbered embodiments wherein the whey protein powder does not contain any of Staphylococcus aureus, Salmonella, or Listeria Monocytogenes.
Numbered embodiment 38. The method according to any one of the preceding Numbered embodiments wherein the whey protein powder has a content of lactate of at most 1% w/w, more preferably at most 0.5% w/w, even more preferably at most 0.1% w/w, and most preferably at most 0.1% w/w.
Numbered embodiment 39. The method according to any one of the preceding Numbered embodiments wherein the whey protein powder has a content of fat of at most 5% w/w, more preferably at most 1% w/w, even more preferably at most 0.5% w/w, and most preferably at most 0.1% w/w.
Numbered embodiment 40. The method according to any one of the preceding Numbered embodiments wherein the whey protein powder has a content of carbohydrate of at most 40% w/w, more preferably at most 20% w/w, even more preferably at most 10% w/w, and most preferably at most 5% w/w.
Numbered embodiment 41. The method according to any one of the preceding Numbered embodiments wherein the whey protein powder has a content of carbohydrate of at most 4% w/w, more preferably at most 2% w/w, even more preferably at most 1% w/w, and most preferably at most 0.5% w/w.
Numbered embodiment 42. The method according to any one of the preceding Numbered embodiments wherein the whey protein powder has a particle size in the range of 10-500 micron, more preferably 20-400 micron, even more preferably 40-300 micron, and most preferably 70-150.
Numbered embodiment 43. The method according to any one of the preceding Numbered embodiments wherein the whey protein powder is in the form of a powder when mixed with the first acidified dairy product.
Numbered embodiment 44. The method according to Numbered embodiment 1 wherein step c) involves preparing a premixture comprising the whey protein powder and an aqueous composition and mixing the premixture and first acidified dairy product.
Numbered embodiment 45. The method according to any one of the preceding Numbered embodiments wherein the premixture is pasteurized before being mixed with the first acidified dairy product.
Numbered embodiment 46. The method according to Numbered embodiment 44 or 45 wherein the aqueous composition is water or a second acidified dairy product.
Numbered embodiment 47. The method according to any one of Numbered embodiments 44-46 wherein the aqueous composition has a total solids content of 5-40% w/w, more preferably 10-30% w/w, even more preferably 14-25% w/w, and most preferably 15-20% w/w.
Numbered embodiment 48. The method according to any one of Numbered embodiments 44-47 wherein the aqueous composition has a protein content of 2-12% w/w, more preferably 4-12% w/w, even more preferably 6-12% w/w, and most preferably 8-12% w/w.
Numbered embodiment 49. The method according to any one of Numbered embodiments 44-48 wherein the aqueous composition has a pH in the range of 3.9-5.1, more preferably 4.0-5.0, even more preferably 4.1-4.9, and most preferably 4.3-4.7.
Numbered embodiment 50. The method according to any one of the preceding Numbered embodiments wherein the whey protein powder has a pH which is at most 1 pH unit higher or lower than the pH of the aqueous composition, more preferably at most 0.7 pH unit higher or lower, even more preferably at most 0.5 pH unit higher or lower and most preferred at most 0.3 pH unit higher or lower than the pH of the aqueous composition.
Numbered embodiment 51. The method according to any one of the preceding Numbered embodiments wherein the premixture has a pH which is at most 1 pH unit higher or lower than the pH of the first acidified dairy product, more preferably at most 0.7 pH unit higher or lower, even more preferably at most 0.5 pH unit higher or lower and most preferred at most 0.3 pH unit higher or lower than the pH of the first acidified dairy product.
Numbered embodiment 52. The method according to any one of the preceding Numbered embodiments wherein the mixture has a pH in the range of 3.9-5.1, more preferably 4.0-5.0, even more preferably 4.1-4.9, and most preferably 4.3-4.7.
Numbered embodiment 53. The method according to any one of the preceding Numbered embodiments wherein the mixture has a protein content in the range of 11-25% w/w, more preferably 12-20% w/w, even more preferably 13-19% w/w, and most preferably 14-18% w/w.
Numbered embodiment 54. The method according to any one of the preceding Numbered embodiments wherein the mixture has a protein content in the range of 20-30% w/w, more preferably 21-30% w/w, even more preferably 22-30% w/w, and most preferably 24-30% w/w.
Numbered embodiment 55. The method according to any one of the preceding Numbered embodiments wherein the mixture has a protein content in the range of 21-30% w/w, more preferably 22-29% w/w, even more preferably 23-28% w/w, and most preferably 24-27% w/w.
Numbered embodiment 56. The method according to any one of the preceding Numbered embodiments wherein the whey protein powder contributes with 10-80% w/w of the protein of the mixture, more preferably 20-70% w/w, even more preferably 30-60% w/w and more preferably 40-50% w/w.
Numbered embodiment 57. The method according to any one of the preceding Numbered embodiments wherein the first acidified dairy product contributes with 10-80% w/w of the protein of the mixture, more preferably 20-70% w/w, even more preferably 30-60% w/w and more preferably 40-50% w/w.
Numbered embodiment 58. The method according to any one of the preceding Numbered embodiments wherein:
   - the whey protein powder contributes with 10-80% of the protein of the mixture, and
   - the first acidified dairy product contributes with 10-80% of the protein of the mixture.
Numbered embodiment 59. The method according to any one of the preceding Numbered embodiments wherein:
   - the whey protein powder contributes with 30-60% of the protein of the mixture, and
   - the first acidified dairy product contributes with 30-60% of the protein of the mixture.
Numbered embodiment 60. The method according to any one of the preceding Numbered embodiments wherein the mixture has a total solids content of 5-35% w/w, more preferably 10-30% w/w, even more preferably 15-25% w/w, and most preferably 17-20% w/w.
Numbered embodiment 61. The method according to any one of the preceding Numbered embodiments wherein the mixture has a carbohydrate content in the range of 1-15% w/w, more preferably 2-12% w/w, even more preferably 2-10% w/w, and most preferably 3-10% w/w.
Numbered embodiment 62. The method according to any one of the preceding Numbered embodiments wherein the mixture has a fat content in the range of 0-10% w/w, more preferably 0-6% w/w, even more preferably 0-5% w/w, and most preferably 0-3.5% w/w.
Numbered embodiment 63. The method according to any one of the preceding Numbered embodiments wherein the mixture has a fat content in the range of 5-15% w/w, more preferably 6-14% w/w, even more preferably 7-13% w/w, and most preferably 8-11% w/w.
Numbered embodiment 64. The method according to any one of the preceding Numbered embodiments wherein the mixture has a fat content in the range of 15-30% w/w, more preferably 18-29% w/w, even more preferably 20-28% w/w, and most preferably 22-27% w/w.
Numbered embodiment 65. The method according to any one of the preceding Numbered embodiments wherein the mixture has a water content in the range of 65-95% w/w, more preferably 70-90% w/w, even more preferably 75-85% w/w, and most preferably 80-83% w/w.
Numbered embodiment 66. The method according to any one of the preceding Numbered embodiments wherein the mixture has a viscosity in the range of 10-200 cP at 5 degrees C.
Numbered embodiment 67. The method according to any one of the preceding Numbered embodiments wherein the mixture has a viscosity in the range of 201-2500 cP at 5 degrees C.
Numbered embodiment 68. The method according to any one of the preceding Numbered embodiments wherein the mixture has a viscosity in the range of 2501-40000 cP at 5 degrees C.
Numbered embodiment 69. The method according to any one of the preceding Numbered embodiments wherein the mixture has a content of lactate of at most 1.0% w/w, more preferably at most 0.9% w/w, even more preferably at most 0.8% w/w, and most preferably at most 0.6% w/w.
Numbered embodiment 70. The method according to any one of the preceding Numbered embodiments wherein the mixture has a content of lactate of 0.2-1.0% w/w, more preferably 0.3-0.9% w/w, even more preferably 0.3-0.8% w/w, and most preferably 0.4-0.6% w/w.
Numbered embodiment 71. The method according to any one of the preceding Numbered embodiments wherein the mixture has a degree of protein denaturation of at least 80%, more preferably at least 85%, even more preferably at least 90%, and most preferably at least 95%.
Numbered embodiment 72. The method according to any one of the preceding Numbered embodiments wherein the mixture has a content of LAB of at least 1*10⁶ cfu/g, more preferably at least 1*10⁷ cfu/g, even more preferably 1*10⁸ cfu/g, and most preferably 1*10⁹ cfu/g.
Numbered embodiment 73. The method according to any one of the preceding Numbered embodiments wherein the mixture has a content of LAB of 1*10⁶ - 9*10¹⁰ cfu/g, more preferably 1*10⁷ - 7*10¹⁰ cfu/g, even more preferably 1*10⁸ - 5*10¹⁰, and most preferably 1*10⁹ - 3*10¹⁰ cfu/g.
Numbered embodiment 74. A high protein, acidified dairy product having:
   - a pH in the range of 3.8-5.2,
   - a protein content in the range of 10-30% w/w, and
   - a total solids content of 5-40% w/w.
Numbered embodiment 75. The high protein, acidified dairy product according to Numbered embodiment 74 wherein the high protein, acidified dairy product has a pH in the range of 3.9-5.1, more preferably 4.0-5.0, even more preferably 4.1-4.9, and most preferably 4.3-4.7.
Numbered embodiment 76. The high protein, acidified dairy product according to Numbered embodiment 74 or 75 wherein the high protein, acidified dairy product has a protein content in the range of 11-25% w/w, more preferably 12-20% w/w, even more preferably 13-19% w/w, and most preferably 14-18% w/w.
Numbered embodiment 77. The high protein, acidified dairy product according to any one of the Numbered embodiments 74-76 wherein the high protein, acidified dairy product has a protein content in the range of 20-30% w/w, more preferably 21-30% w/w, even more preferably 22-30% w/w, and most preferably 24-30% w/w.
Numbered embodiment 78.1. The high protein, acidified dairy product according to any one of the Numbered embodiments 74-77 wherein the high protein, acidified dairy product has a protein content in the range of 21-30% w/w, more preferably 22-29% w/w, even more preferably 23-28% w/w, and most preferably 24-27% w/w.
Numbered embodiment 78.2. The high protein, acidified dairy product according to any one of the Numbered embodiments 74-78.1 wherein the whey protein powder contributes with 5-90% w/w of the protein of the high protein, acidified dairy product, more preferably 20-70% w/w, even more preferably 30-60% w/w and more preferably 40-50% w/w.
Numbered embodiment 79. The high protein, acidified dairy product according to any one of the Numbered embodiments 74-78.2 wherein the first acidified dairy product contributes with 20-90% w/w of the protein of the high protein, acidified dairy product, more preferably 30-90% w/w, even more preferably 40-90% w/w and more preferably 50-90% w/w.
Numbered embodiment 80. The high protein, acidified dairy product according to any one of the Numbered embodiments 74-79 wherein:
   - the whey protein powder contributes with 5-90% of the protein of the high protein, acidified dairy product, and
   - the first and second acidified dairy products have a combined protein contribution of 5-90% of the protein of the high protein, acidified dairy product.
Numbered embodiment 81. The high protein, acidified dairy product according to any one of the Numbered embodiments 74-80 wherein:
   - the whey protein powder contributes with 50-90% of the protein of the high protein, acidified dairy product, and
   - the first and second acidified dairy products have a combined protein contribution of 5-45% of the protein of the high protein, acidified dairy product.
Numbered embodiment 82. The high protein, acidified dairy product according to any one of the Numbered embodiments 74- 81 wherein the high protein, acidified dairy product has a total solids content of 5-35% w/w, more preferably 10-30% w/w, even more preferably 15-25% w/w, and most preferably 17-20% w/w.
Numbered embodiment 83. The high protein, acidified dairy product according to any one of the Numbered embodiments 74-82 wherein the high protein, acidified dairy product has a carbohydrate content in the range of 1-15% w/w, more preferably 2-12% w/w, even more preferably 2-10% w/w, and most preferably 3-10% w/w.
Numbered embodiment 84. The high protein, acidified dairy product according to any one of the Numbered embodiments 74-83 wherein the high protein, acidified dairy product has a fat content in the range of 0-10% w/w, more preferably 0-6% w/w, even more preferably 0-5% w/w, and most preferably 0-3.5% w/w.
Numbered embodiment 85. The high protein, acidified dairy product according to any one of the Numbered embodiments 74-84 wherein the high protein, acidified dairy product has a fat content in the range of 5-15% w/w, more preferably 6-14% w/w, even more preferably 7-13% w/w, and most preferably 8-11% w/w.
Numbered embodiment 86. The high protein, acidified dairy product according to any one of the Numbered embodiments 74- 85 wherein the high protein, acidified dairy product has a fat content in the range of 15-30% w/w, more preferably 18-29% w/w, even more preferably 20-28% w/w, and most preferably 22-27% w/w.
Numbered embodiment 87. The high protein, acidified dairy product according to any one of the Numbered embodiments 74-86 wherein the high protein, acidified dairy product has a water content in the range of 65-95% w/w, more preferably 70-90% w/w, even more preferably 75-85% w/w, and most preferably 80-83% w/w.
Numbered embodiment 88. The high protein, acidified dairy product according to any one of the Numbered embodiments 74-87 wherein the high protein, acidified dairy product has a viscosity in the range of 10-200 cP at 5 degrees C.
Numbered embodiment 89. The high protein, acidified dairy product according to any one of the Numbered embodiments 74-88 wherein the high protein, acidified dairy product has a viscosity in the range of 201-2500 cP at 5 degrees C.
Numbered embodiment 90. The high protein, acidified dairy product according to any one of the Numbered embodiments 74-89 wherein the high protein, acidified dairy product has a viscosity in the range of 2501-40000 cP at 5 degrees C.
Numbered embodiment 91. The high protein, acidified dairy product according to any one of the Numbered embodiments 74-90 wherein the high protein, acidified dairy product has a content of lactate of at most 1.0% w/w, more preferably at most 0.9% w/w, even more preferably at most 0.8% w/w, and most preferably at most 0.6% w/w.
Numbered embodiment 92. The high protein, acidified dairy product according to any one of the Numbered embodiments 74- 91 wherein the high protein, acidified dairy product has a content of lactate of 0.2-1.0% w/w, more preferably 0.3-0.9% w/w, even more preferably 0.3-0.8% w/w, and most preferably 0.4-0.6% w/w.
Numbered embodiment 93. The high protein, acidified dairy product according to any one of the Numbered embodiments 74- 92 the high protein, acidified dairy product has a degree of protein denaturation of at least 80%, more preferably at least 85%, even more preferably at least 90%, and most preferably at least 95%.
Numbered embodiment 94. The high protein, acidified dairy product according to any one of the Numbered embodiments 74-94 wherein the high protein, acidified dairy product has a content of LAB of at least 1*10⁶ cfu/g, more preferably at least 1*10⁷ cfu/g, even more preferably 1*10⁸ cfu/g, and most preferably 1*10⁹ cfu/g.
Numbered embodiment 95. The high protein, acidified dairy product according to any one of the Numbered embodiments 74-94 wherein the high protein, acidified dairy product has a content of LAB of 1*10⁶ - 9*10¹⁰ cfu/g, more preferably 1*10⁷ - 7*10¹⁰ cfu/g, even more preferably 1*10⁸ - 5*10¹⁰, and most preferably 1*10⁹ - 3*10¹⁰ cfu/g.
Numbered embodiment 96. The high protein, acidified dairy product according to any one of the Numbered embodiments 74-95 which is obtainable by a method according to one or more of Numbered embodiments 1-73.
Numbered embodiment 97. A whey protein powder having:
   - a pH in the range of 3.8-5.2,
   - a protein content of at least 50% w/w,
   - a weight ratio between the protein content and the sum of Ca and Mg of at least 200, and
   - preferably, a combined content of carbohydrate and protein of at least 80% w/w,
   - preferably, a degree of protein denaturation of at most 15%.
Numbered embodiment 98. The whey protein powder according to Numbered embodiment 97 which has a pH in the range of 3.9-5.1, more preferably 4.0-5.0, even more preferably 4.1-4.9, and most preferably 4.3-4.7.
Numbered embodiment 99. The whey protein powder according to Numbered embodiment 97 or 97 wherein the whey protein powder has a pH which is at most 1 pH unit higher or lower than the pH of the first acidified dairy product, more preferably at most 0.7 pH unit higher or lower, even more preferably at most 0.5 pH unit higher or lower and most preferred at most 0.3 pH unit higher or lower than the pH of the first acidified dairy product.
Numbered embodiment 100. The whey protein powder according to any one of the Numbered embodiments 97-99 wherein the whey protein powder has a protein content of at least 50% w/w, more preferably at least 70% w/w, even more preferably at least 80% w/w, and most preferably at least 84% w/w.
Numbered embodiment 101. The whey protein powder according to any one of the Numbered embodiments 97-100 wherein the whey protein powder has a protein content of at least 86% w/w, more preferably at least 88% w/w, even more preferably at least 90% w/w, and most preferably at least 92% w/w.
Numbered embodiment 102. The whey protein powder according to any one of the Numbered embodiments 97-101 wherein the whey protein powder has a combined content of carbohydrate and protein of at least 80% w/w, more preferably at least 85% w/w, even more preferably at least 90% w/w, and most preferably at least 92% w/w.
Numbered embodiment 103. The whey protein powder according to any one of the Numbered embodiments 97-102 wherein the whey protein powder has a weight ratio between the protein content and the sum of Ca and Mg of at least 300, more preferably at least 400, even more preferably at least 600, and most preferably at least 800.
Numbered embodiment 104. The whey protein powder according to any one of the Numbered embodiments 97-103 wherein the whey protein powder has a weight ratio between the protein content and the sum of Ca and Mg of at least 1000, more preferably at least 1400, even more preferably at least 1800, and most preferably at least 2000.
Numbered embodiment 105. The whey protein powder according to any one of the Numbered embodiments 97-104 wherein the whey protein powder has a weight ratio between the protein content and the sum of Ca and Mg of 200-10000, more preferably 600-6000, and most preferably 800-4000.
Numbered embodiment 106. The whey protein powder according to any one of the Numbered embodiments 97-105 wherein the whey protein powder has a weight ratio between the protein content and the sum of Ca and Mg of 1000-10000, more preferably 1400-6000, even more preferably 1800-5000, and most preferably 2000-4000.
Numbered embodiment 107. The whey protein powder according to any one of the Numbered embodiments 97-106 wherein the whey protein powder has a weight ratio between the protein content and the sum of K and Na of at least 50, more preferably at least 60, even more preferably at least 70, and most preferably at least 90.
Numbered embodiment 108. The whey protein powder according to any one of the Numbered embodiments 97-107 wherein the whey protein powder has a weight ratio between the protein content and the sum of K and Na of 50-2000, more preferably 60-1500, even more preferably 70-1000, and most preferably 90-1000.
Numbered embodiment 109. The whey protein powder according to any one of the Numbered embodiments 97-108 wherein the whey protein powder has a degree of protein denaturation of at most 15%, more preferably at most 12%, even more preferably at most 10%, and most preferably at most 8%.
Numbered embodiment 110. The whey protein powder according to any one of the Numbered embodiments 97-109 wherein the whey protein powder has a total plate count of at most 10.000 cfu/g, more preferably at most 5.000 cfu/g, even more preferably at most 2000 cfu/g/ and most preferably at most 1000 cfu/g.
Numbered embodiment 111. The whey protein powder according to any one of the Numbered embodiments 97-110 wherein the whey protein powder has a content of Enterobacteriaceae of at most 100 cfu/g, more preferably at most 50 cfu/g, even more preferably at most 20 cfu/g/ and most preferably 10 cfu/g.
Numbered embodiment 112. The whey protein powder according to any one of the Numbered embodiments 97-111 wherein the whey protein powder has a content of Enterobacteriaceae of at most 8 cfu/g, more preferably at most 5 cfu/g, even more preferably at most 1 cfu/g/ and most preferably no cfu/g.
Numbered embodiment 113. The whey protein powder according to any one of the Numbered embodiments 97-112 wherein the whey protein powder has a content of Bacillus cereus of at most 100 cfu/g, more preferably at most 50 cfu/g, even more preferably at most 20 cfu/g/ and most preferably at most 100 cfu/g.
Numbered embodiment 114. The whey protein powder according to any one of the Numbered embodiments 97-113 wherein the whey protein powder has a content of sulphur reducing Clos-tridia of at most 500 cfu/g, more preferably at most 300 cfu/g, even more preferably at most 200 cfu/g/ and most preferably at most 100 cfu/g.
Numbered embodiment 115. The whey protein powder according to any one of the Numbered embodiments 97-114 wherein the whey protein powder has a content of Yeast and mould of at most 100 cfu/g, more preferably at most 50 cfu/g, even more preferably at most 20 cfu/g/ and most preferably at most 10 cfu/g.
Numbered embodiment 116. The whey protein powder according to any one of the Numbered embodiments 97-115 wherein the whey protein powder does not contain any of Staphylococcus aureus, Salmonella, or Listeria Monocytogenes.
Numbered embodiment 117. The whey protein powder according to any one of the Numbered embodiments 97-116 wherein the whey protein powder has a content of lactate of at most 1% w/w, more preferably at most 0.5% w/w, even more preferably at most 0.1% w/w, and most preferably at most 0.1% w/w.
Numbered embodiment 118. The whey protein powder according to any one of the Numbered embodiments 97-117 wherein the whey protein powder has a content of fat of at most 5% w/w, more preferably at most 1% w/w, even more preferably at most 0.5% w/w, and most preferably at most 0.1% w/w.
Numbered embodiment 119. The whey protein powder according to any one of the Numbered embodiments 97-118 wherein the whey protein powder has a content of carbohydrate of at most 40% w/w, more preferably at most 20% w/w, even more preferably at most 10% w/w, and most preferably at most 5% w/w.
Numbered embodiment 120. The whey protein powder according to any one of the Numbered embodiments 97-119 wherein the whey protein powder has a content of carbohydrate of at most 4% w/w, more preferably at most 2% w/w, even more preferably at most 1% w/w, and most preferably at most 0.5% w/w.
Numbered embodiment 121. The whey protein powder according to any one of the Numbered embodiments 97-120 wherein the whey protein powder has a particle size in the range of 10-500 micron, more preferably 20-400 micron, even more preferably 40-300 micron, and most preferably 70-150.
Numbered embodiment 122. Use of the whey protein powder according to any one of Numbered embodiments 97-121 as a food ingredient, preferably for:
   - enriching the protein content of a food product, preferably an acidified dairy product, and/or
   - increasing the content of native whey protein of a food product, preferably an acidified dairy product, and/or
   - improving the taste of high protein, acidified dairy products, and/or
   - improving the stability high protein, acidified dairy products, and/or
   - improving the texture of high protein, acidified dairy products.

The present invention has been described above with reference to specific embodiments. However, other embodiments than the above described are equally possible within the scope of the invention. The different features and steps of various embodiments and aspects of the invention may be combined in other ways than those described herein unless it is stated otherwise.

### EXAMPLES

### Methods of analysis

### Analysis 1: Determination of viscosity and texture

The viscosity is measured using a bob cup system (CC27 Cup: CC27-/QC-LTD) from QC Anton Paar Rheometer. The temperature of the sample to be analysed is adjusted to 5 degrees C prior to the measurement and the viscosity is recorded at a shear rate of 50 1/s and presented in the unit cP.

The texture parameter is determined using a TextureAnalyser and a P/35 Alu probe (Stable Micro Systems) and quantifies the force required to push the probe 30 mm into the sample at 12 degrees C. The force relative to distance is recorded and the texture is calculated as the areal under the curve when plotting force vs. distance. The texture is presented in the unit gram/mm.

### Analysis 2: Measurement of pH

All pH values are measured using a pH glass electrode and at 25 degrees C.

The pH glass electrode (having temperature compensation) is rinsed carefully and calibrated before use.

When the sample is in liquid form, then pH is measured directly in the liquid solution at 25 degrees C.

When the sample is a powder, 10 gram of a powder is dissolved in 90 ml of demineralised water at room temperature while stirring vigorously. The pH of the solution is then measured at 25 degrees C.

### Analysis 3: Determination of the amounts of calcium, magnesium, sodium, potassium and phosphorus (ICP-MS method)

The total amounts of calcium, magnesium, sodium, potassium, and phosphorus are determined using a procedure in which the samples are first decomposed using microwave digestion, and then the total amount of mineral(s) is determined using an ICP apparatus.

### Apparatus:

The microwave is from Anton Paar and the ICP is an Optima 2000DV from PerkinElmer Inc. Materials:
1 M HNO₃
Yttrium in 2% HNO₃

Suitable standards for calcium, magnesium, sodium, potassium, and phosphorus in 5% HNO₃ Pre-treatment:
Weigh out a certain amount of powder and transfer the powder to a microwave digestion tube. Add 5 mL 1M HNO₃. Digest the samples in the microwave in accordance with microwave instructions.

Place the digested tubes in a fume cupboard, remove the lid and let volatile fumes evaporate.

### Measurement procedure:

Transfer pre-treated sample to DigiTUBE using a known amount of Milli-Q water. Add a solution of yttrium in 2% HNO₃ to the digestion tube (about 0.25 mL per 50 mL diluted sample) and dilute to known volume using Milli-Q water. Analyse the samples on the ICP using the procedure described by the manufacturer.

A blind sample is prepared by diluting a mixture of 10 mL 1M HNO₃ and 0.5 mL solution of yttrium in 2% HNO₃ to a final volume of 100 mL using Milli-Q water.

At least 3 standard samples are prepared having concentrations which bracket the expected sample concentrations.

### Analysis 4: Determination the degree of protein denaturation

The degree of protein denaturation is measured according to Example 9.11 of WO 2018/115520.

### Analysis 5: Determination of total protein

The total protein content (true protein) of a sample is determined by:
1) Determining the total nitrogen of the sample following ISO 8968-1/2|IDF 020-1/2- Milk - Determination of nitrogen content - Part 1/2: Determination of nitrogen content using the Kjeldahl method.
2) Determining the non-protein nitrogen of the sample following ISO 8968-4|IDF 020-4- Milk - Determination of nitrogen content - Part 4: Determination of non-protein-nitrogen content.
3) Calculating the total amount protein as (mₜₒₜₐₗ nitrogen - m_{non-protein-nitrogen})*6.38.

### Analysis 6: Determination of the total amount of lipid

The amount of lipid is determined according to ISO 1211:2010 (Determination of Fat Content - Röse-Gottlieb Gravimetric Method).

### Analysis 7: Determination of the total amount of lactose

The total amount of lactose is determined according to ISO 5765-2:2002 (IDF 79-2: 2002) "Dried milk, dried ice-mixes and processed cheese - Determination of lactose content - Part 2: Enzymatic method utilizing the galactose moiety of the lactose".

### Analysis 8: Determination of the ash content

The ash content of a food product is determined according to NMKL 173:2005 "Ash, gravimetric determination in foods".

### Analysis 9: Determination of total solids and water content

The total solids content of a product may be determined according to NMKL 110 2_{nd} Edition, 2005 (Total solids (Water) - Gravimetric determination in milk and milk products). NMKL is an abbreviation for "Nordisk Metodikkomité for Næringsmidler".

The water content of a sample can be calculated as 100% minus the relative amount of total solids (% w/w).

### Example 1: Preparation of acidified dairy products containing 14-28% w/w protein

This example describes the production of 5 samples of high protein, yoghurt-type product.

### Materials:

- Traditional Greek yoghurt prepared by ultrafiltration of milk acidified with lactic acid bacteria (see Table 1).
- Acidic whey protein powder prepared by acidification and demineralisation of protein from sweet whey (see Table 1).

**Table 1 Composition of the Greek yoghurt and the whey protein powder in weight percent.**

| | | Greek yoghurt | Acidic whey protein powder |
|---|---|---|---|
| Total solids | | 18% | 95% |
| Fat | | 3% | 0.1% |
| Carbohydrate | | 4% | 4.4% |
| Protein | | 9% | 84.1% |
| | Native Beta-lactoglobulin | 0.1% | 47.9% |
| | Native Alpha-lactalbumin | 0.1% | 14.4% |
| | Caseinomacropeptide | 0% | 10.8% |
| Ash | | 0.80% | 3.1% |
| | Calcium | 0.14% | 0.1% |
| | Magnesium | 0.01% | 0.01% |
| | Sodium | 0.05% | 0.27% |
| | Potassium | 0.15% | 0.65% |
| Lactate | | 0.8% | <0.05% |
| pH | | 4.4 | 4.6 |
| Degree of protein denaturation | | 90% | Approx. 5% |

### Process:

5 different yoghurts according to the invention were prepared by heating the Greek yoghurt to 15 degrees C and mixing it with the whey protein powder. The mixture was allowed to rest for 1 hour under gentle stirring after the addition of the whey protein powder after which the mixture was heated to 52 degrees C and homogenized using a pressure drop a 20 bar.

The production of samples 3-5 furthermore included pasteurising the mixture of the first Greek yoghurt and whey protein powder after the homogenisation. The pasteurisation involves heating the mixture to 72 degrees C for 15 seconds and subsequently cooling the pasteurized mixture. The production of samples 4 and 5 furthermore included mixing the pasteurized mixture with a second portion of Greek yoghurt which subsequently was allowed to ferment at 32 degrees C for one hour.

All final samples were cooled to 5 degrees C and then assessed with respect to sensory characteristics.

**Table 2 Process details relating to the 5 samples of the high protein, acidified dairy product of the invention.**

| **Ingredients (parts by weight)** | **1** | **2** | **3** | **4** | **5** |
|---|---|---|---|---|---|
| Initial Greek yoghurt | 93 | 75 | 75 | 75 | 75 |
| Whey protein powder | 7 | 25 | 25 | 25 | 25 |
| | | | | | |
| Pasteurisation of initial mixture | No | No | Yes | Yes | Yes |
| | | | | | |
| Further Greek yoghurt | No | No | No | 100 | 250 |
| | | | | | |

| **Parameters of the end product** | | | | | |
|---|---|---|---|---|---|
| Total protein (% w/w) | 14.3% | 27.8% | 27.8% | 18.4% | 14.4% |
| pH | 4.4 | 4.5 | 4.5 | 4.5 | 4.4 |

### Results:

The five yoghurt samples all had very pleasant textural and organoleptic properties and no detectable sandiness. Notably the yoghurts were less bitter than was to be expected from a high protein yoghurt product containing more than 10% protein.

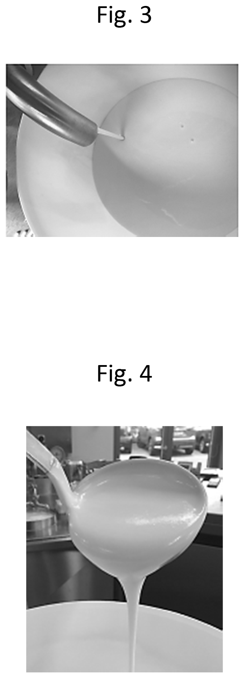

Sample 2 had a liquid, low viscous appearance (see figure 3 showing a top view of the hydrated, homogenized mixture being pumped into a plastic bucket) and sample 3 was nicely pourable despite the fact that it had been subjected to a pasteurisation (see figure 4).

### Conclusion:

The acidic whey protein powder was found to be well-suited for production of acidified dairy products having very high protein content and makes it possible to produce yoghurt products with better sensory properties than comparable prior art products. The acidic whey protein powder furthermore enabled the production of a new class of very high protein, yoghurt products having a protein content of at least 20% w/w.

The inventors have observed that addition of pH neutral whey protein powder to acidified dairy products (i.e. after acidification) affects the stability and sensory properties of the products negatively. Similarly, the present inventors have observed that if large quantities of native whey protein are added to the yoghurt milk prior to pasteurisation and fermentation the yoghurt process becomes unstable due to fouling/clogging of the plate heat-exchanger and high gel formation during fermentation.

### Example 2: Preparation of high protein drinking yoghurts containing 20% protein

This example describes the production of two high protein drinking yoghurts according to the invention.

### Materials:

- Skimmed milk yoghurt (approx. 3.5% protein; see composition in Table 3)
- Drinking yoghurt with 8.5% protein (produced as described below)
- Antifoaming agent (Magrabar PD-702, Münzing North America, USA)
- Tocopherol
- Sucralose Splenda Powder
- Acesulfame K
- Red food color (carmine CC-1000-WS)
- Raspberry flavour
- Acidic whey protein powder prepared by acidification and demineralisation of protein from sweet whey (with the composition shown in Table 1).

**Table 3 Composition of the skimmed milk yoghurt, the drinking yoghurt with 8.5% protein, and WPC80 in weight percent.**

| | | Skimmed milk yoghurt | Drinking yoghurt with 8.5% protein^{*)} |
|---|---|---|---|
| Total solids | | 9.2 | 16 |
| Fat | | 0.03 | 0.48 |
| Carbohydrate | | 4.7 | 5.6 |
| Protein | | 3.5 | 8.5 |
| Ash | | 0.7 | 1.02 |
| | Calcium | 0.124 | 0.129 |
| | Magnesium | 0.012 | 0.007 |
| | Sodium | 0.04 | 0.,055 |
| | Potassium | 0.15 | 0.192 |
| pH | | 4.48 | 4.50 |

| | | | |
|---|---|---|---|
| ^{*)} The drinking yoghurt containing 8.5% protein was prepared by blending 70.4% water, 4.5% Nutrilac^{®} YO-8075 powder (80% whey protein, 7% fat, 3% lactose, 2.5% ash ), 5.0% Nutrilac^{®} YO-5088 powder (50% whey protein, 32% lactose, max. 5% fat, 4% ash), and 7.2% skimmed milk powder, and allowing the blend to hydrate at 10 degrees C for 2 hours. The hydrated blend was then preheated to 65 degrees C, homogenized using a two-stage homogenizer (at 200 bar and 50 bar) cooled to 42 degrees C and inoculated with a starter culture for high protein fermentation and incubated until a pH of 4.55 was reached. | | | |

### Process:

The two samples of drinking yoghurt were prepared by heating the skimmed milk yoghurt or the 8.5% protein drinking yoghurt to 30 degrees C and mixing it with the antifoaming agent.

When the antifoaming agent was dissolved in the yoghurt the protein powder was blended into the yoghurt and allowed to hydrate for 2 hours at 30 degrees C under gentle stirring. After the addition of the whey protein powder the mixture was heated to 60 degrees C and homogenized using a pressure drop of 180 bar, pasteurized in a plate heat exchanger to a temperature of 75 degrees C and holding time of 30 seconds and subsequently cooled to 23 degrees C. The resulting drinking yoghurts were filled aseptically into sterile bottles at 23 degrees C.

Both high protein, drinking yoghurt samples were subjected to sensory testing and sample 7 was furthermore storage ambient for 4 months and subjected to viscosity testing according to Analysis 1.

**Table 4 Ingredients and parameters of drinking yoghurt samples 6-7.**

| **Ingredients (parts by weight)** | **sample 6** | **sample 7** |
|---|---|---|
| Skimmed milk yoghurt | 81.1% | |
| 8.5% protein drinking yoghurt | | 87.2% |
| Acidic whey protein powder of the invention | 18.7% | 12.5% |
| Antifoam, Magrabar PD-702 | 0.10% | 0.10% |
| Tocopherol | 0.006% | 0.006% |
| Sucralose Splenda Powder | 0.006% | 0.006% |
| Acesulfame K | 0.008% | 0.008% |
| Red food colour | 0.010% | 0.010% |
| Raspberry flavour | 0.060% | 0.060% |
| | | |

| **Parameters of the final yoghurt** | | |
|---|---|---|
| Total protein (% w/w) | 20.3% | 20.2% |
| pH | 4.4 | 4.5 |

### Results:

The sensory testing revealed that the drinking yoghurt sample 6 and 7 had a very pleasant smooth and creamy consistency, only a low level of astringency and no detectable sandiness. Notably the yoghurts were less bitter than was to be expected from a high protein yoghurt product containing more than 10% protein and had less cooked flavour than expected.

Sample 7 was had a nicely pourable consistency right after production and had a viscosity of 46 cP after 4 months storage at ambient temperature.

### Conclusion:

As in Example 1, the acidic whey protein powder was found to be well-suited for production of acidified dairy products having very high protein content and made it possible to produce yoghurt products with better sensory properties than can be obtained with conventional dairy technology.

Preferred, numbered embodiment 1. A method of producing a high protein, acidified dairy product having a protein content in the range of 10-30% w/w and a pH in the range of 3.8-5.2, the method comprising the steps of:
a) providing a first acidified dairy product having:
   - a pH in the range of 3.8-5.2,
   - a protein content in the range of 2-12% w/w, and
   - a total solids content of 5-35% w/w,
b) providing a whey protein powder having:
   - a pH in the range of 3.8-5.2,
   - a protein content of at least 50% w/w
   - a weight ratio between the protein content and the sum of Ca and Mg of at least 200,
   - preferably, a combined content of carbohydrate and protein of at least 80% w/w,
      and
   - preferably, a degree of protein denaturation of at most 15%,
c) combining the first acidified dairy product, the whey protein powder and optionally one or more further ingredients to form a mixture having a protein content in the range of 10-30% w/w,
d) optionally, combining the mixture with one or more additional ingredients, and
e) optionally, filling the mixture or a combination of the mixture and one or more additional ingredients into suitable containers,
wherein the high protein, acidified dairy product is the mixture obtained from step c) or the combination of the mixture and one or more additional ingredients.

Preferred, numbered embodiment 2. The method according to claim 1 wherein the first acidified dairy product has a protein content in the range of 4-12% w/w, more preferably 6-12% w/w, even more preferably 8-12% w/w, and most preferably 8-11% w/w.

Preferred, numbered embodiment 3. The method according to any one of the preceding claims wherein the first acidified dairy product has:
- a viscosity in the range of 10-200 cP at 5 degrees C, or
- a viscosity in the range of 201-5000 cP at 5 degrees C, or
- a texture of 4000-40000 force area (g*sec) at 12 degrees C.

Preferred, numbered embodiment 4. The method according to any one of the preceding claims wherein the first acidified dairy product has a content of lactate of at most 1.0% w/w, more preferably at most 0.9% w/w, even more preferably at most 0.8% w/w, and most preferably at most 0.6% w/w.

Preferred, numbered embodiment 5. The method according to any one of the preceding claims wherein the whey protein powder has a pH which is at most 1 pH unit higher or lower than the pH of the first acidified dairy product, more preferably at most 0.7 pH unit higher or lower, even more preferably at most 0.5 pH unit higher or lower and most preferred at most 0.3 pH unit higher or lower than the pH of the first acidified dairy product.

Preferred, numbered embodiment 6. The method according to any one of the preceding claims wherein the whey protein powder has a weight ratio between the protein content and the sum of Ca and Mg of at least 300, more preferably at least 400, even more preferably at least 600, and most preferably at least 800.

Preferred, numbered embodiment 7. The method according to any one of the preceding claims wherein the whey protein powder has a particle size in the range of 10-500 micron, more preferably 20-400 micron, even more preferably 40-300 micron, and most preferably 70-150.

Preferred, numbered embodiment 8. The method according to any one of the preceding claims wherein the whey protein powder is in the form of a powder when mixed with the first acidified dairy product.

Preferred, numbered embodiment 9. The method according to claim 1 wherein step c) involves preparing a premixture comprising the whey protein powder and an aqueous composition and mixing the premixture and first acidified dairy product, and preferably wherein the aqueous composition is a second acidified dairy product having:
- a pH in the range of 3.8-5.2,
- a protein content in the range of 2-12% w/w, and
- a total solids content of 5-35% w/w.

Preferred, numbered embodiment 10. A high protein, acidified dairy product having:
- a pH in the range of 3.8-5.2,
- a protein content in the range of 10-30% w/w, and
- a total solids content of 5-40% w/w, and
said the high protein, acidified dairy product is obtainable by a method according to one or more of claims 1-9.

Preferred, numbered embodiment 11. The high protein, acidified dairy product according to claim 10 wherein the high protein, acidified dairy product has a protein content in the range of 21-30% w/w, more preferably 22-29% w/w, even more preferably 23-28% w/w, and most preferably 24-27% w/w.

Preferred, numbered embodiment 12. The high protein, acidified dairy product according to any one of the claims 10-11 wherein the high protein, acidified dairy product has a content of lactate of at most 1.0% w/w, more preferably at most 0.9% w/w, even more preferably at most 0.8% w/w, and most preferably at most 0.6% w/w.

Preferred, numbered embodiment 13. The high protein, acidified dairy product according to any one of the claims 10-12 a weight ratio between whey protein and casein in the range of 5:95-100:0, more preferably 50:50-95:5, even more preferably 60:40-90:10, and most preferably 65:35-85:15.

Preferred, numbered embodiment 14. The high protein, acidified dairy product according to any one of the claims 10-13 having a weight ratio between whey protein and casein in the range of 5:95-100:0, more preferably 50:50-95:5, even more preferably 60:40-90:10, and most preferably 65:35-85:15.

Preferred, numbered embodiment 15. The high protein, acidified dairy product according to any one of the claims 10-14 wherein the whey protein powder contributes with 20-90% w/w of the protein of the high protein, acidified dairy product, more preferably 30-90% w/w, even more preferably 40-90% w/w and most preferably 50-90% w/w.

Preferred, numbered embodiment 16. The high protein, acidified dairy product according to any one of the claims 10-15 wherein the whey protein powder contributes with 5-60% w/w of the protein of the high protein, acidified dairy product, more preferably 15-50% w/w, even more preferably 20-45% w/w and most preferably 25-40% w/w.

Preferred, numbered embodiment 17. The high protein, acidified dairy product according to any one of the claims 10-16 wherein the first acidified dairy product contributes with 10-80% w/w of the protein of the high protein, acidified dairy product, more preferably 20-70% w/w, even more preferably 30-60% w/w and most preferably 40-50% w/w.

Preferred, numbered embodiment 18. The high protein, acidified dairy product according to any one of the claims 10-17 wherein:
- the whey protein powder contributes with 5-90% of the protein of the high protein, acidified dairy product, and
- the first and second acidified dairy products have a combined protein contribution of 5-90% of the protein of the high protein, acidified dairy product,
and where the term "combined protein contribution" of the first and second acidified dairy product does not require the presence of the second acidified dairy product but if the second acidified dairy product is used its protein contribution must be added to the contribution of the first acidified dairy product.

Preferred, numbered embodiment 19. The high protein, acidified dairy product according to any one of the claims 10-18 wherein:
- the whey protein powder contributes with 50-90% of the protein of the high protein, acidified dairy product, and
- the first and second acidified dairy products have a combined protein contribution of 5-45% of the protein of the high protein, acidified dairy product,
and where the term "combined protein contribution" of the first and second acidified dairy product does not require the presence of the second acidified dairy product but if the second acidified dairy product is used its protein contribution must be added to the contribution of the first acidified dairy product.

Preferred, numbered embodiment 20. A whey protein powder having:
- a pH in the range of 3.8-5.2,
- a protein content of at least 50% w/w,
- a weight ratio between the protein content and the sum of Ca and Mg of at least 200, and
- preferably, a combined content of carbohydrate and protein of at least 80% w/w,
- preferably, a degree of protein denaturation of at most 15%.

Preferred, numbered embodiment 21. The whey protein powder according to claim 20 wherein the whey protein powder has a content of lactate of at most 1% w/w, more preferably at most 0.5% w/w, even more preferably at most 0.2% w/w, and most preferably at most 0.1% w/w.

Preferred, numbered embodiment 22. The whey protein powder according to claim 20 or 21 wherein the whey protein powder has a particle size in the range of 10-500 micron, more preferably 20-400 micron, even more preferably 40-300 micron, and most preferably 70-150.

## Claims

1. A method of producing a high protein, acidified dairy product having a protein content in the range of 10-30% w/w and a pH in the range of 3.8-5.2, the method comprising the steps of:
a) providing a first acidified dairy product having:
- a pH in the range of 3.8-5.2,
- a protein content in the range of 2-12% w/w, and
- a total solids content of 5-35% w/w,
b) providing a whey protein powder having:
- a pH in the range of 3.8-5.2,
- a protein content of at least 50% w/w
- a weight ratio between the protein content and the sum of Ca and Mg of at least 200,
- preferably, a combined content of carbohydrate and protein of at least 80% w/w,
and
- preferably, a degree of protein denaturation of at most 15%,
c) combining the first acidified dairy product, the whey protein powder and optionally one or more further ingredients to form a mixture having a protein content in the range of 10-30% w/w,
d) optionally, combining the mixture with one or more additional ingredients, and
e) optionally, filling the mixture or a combination of the mixture and one or more additional ingredients into suitable containers,
wherein the high protein, acidified dairy product is the mixture obtained from step c) or the combination of the mixture and one or more additional ingredients.

2. The method according to claim 1 wherein the first acidified dairy product has a protein content in the range of 4-12% w/w, more preferably 6-12% w/w, even more preferably 8-12% w/w, and most preferably 8-11% w/w.

3. The method according to any one of the preceding claims wherein the first acidified dairy product has:
- a viscosity in the range of 10-200 cP at 5 degrees C, or
- a viscosity in the range of 201-5000 cP at 5 degrees C, or
- a texture of 4000-40000 force area (g*sec) at 12 degrees C.

4. The method according to any one of the preceding claims wherein the first acidified dairy product has a content of lactate of at most 1.0% w/w, more preferably at most 0.9% w/w, even more preferably at most 0.8% w/w, and most preferably at most 0.6% w/w.

5. The method according to any one of the preceding claims wherein the whey protein powder has a weight ratio between the protein content and the sum of Ca and Mg of at least 300, more preferably at least 400, even more preferably at least 600, and most preferably at least 800.

6. The method according to any one of the preceding claims wherein the whey protein powder has a particle size in the range of 10-500 micron, more preferably 20-400 micron, even more preferably 40-300 micron, and most preferably 70-150.

7. A high protein, acidified dairy product having:
- a pH in the range of 3.8-5.2,
- a protein content in the range of 10-30% w/w, and
- a total solids content of 5-40% w/w, and
said the high protein, acidified dairy product is obtainable by a method according to one or more of claims 1-6.

8. The high protein, acidified dairy product according to claim 7 wherein the high protein, acidified dairy product has a protein content in the range of 21-30% w/w, more preferably 22-29% w/w, even more preferably 23-28% w/w, and most preferably 24-27% w/w.

9. The high protein, acidified dairy product according to any one of the claims 7-8 wherein the high protein, acidified dairy product has a content of lactate of at most 1.0% w/w, more preferably at most 0.9% w/w, even more preferably at most 0.8% w/w, and most preferably at most 0.6% w/w.

10. The high protein, acidified dairy product according to any one of the claims 7-9 a weight ratio between whey protein and casein in the range of 5:95-100:0, more preferably 50:50-95:5, even more preferably 60:40-90:10, and most preferably 65:35-85:15.

11. The high protein, acidified dairy product according to any one of the claims 7-10 wherein the whey protein powder contributes with 20-90% w/w of the protein of the high protein, acidified dairy product, more preferably 30-90% w/w, even more preferably 40-90% w/w and most preferably 50-90% w/w or wherein the whey protein powder contributes with 5-60% w/w of the protein of the high protein, acidified dairy product, more preferably 15-50% w/w, even more preferably 20-45% w/w and most preferably 25-40% w/w.

12. The high protein, acidified dairy product according to any one of the claims 7-11 wherein the first acidified dairy product contributes with 10-80% w/w of the protein of the high protein, acidified dairy product, more preferably 20-70% w/w, even more preferably 30-60% w/w and most preferably 40-50% w/w.

13. A whey protein powder having:
- a pH in the range of 3.8-5.2,
- a protein content of at least 50% w/w,
- a weight ratio between the protein content and the sum of Ca and Mg of at least 200, and
- preferably, a combined content of carbohydrate and protein of at least 80% w/w,
- preferably, a degree of protein denaturation of at most 15%.

14. The whey protein powder according to claim 13 wherein the whey protein powder has a content of lactate of at most 1% w/w, more preferably at most 0.5% w/w, even more preferably at most 0.2% w/w, and most preferably at most 0.1% w/w.

15. The whey protein powder according to claim 13 or 14 wherein the whey protein powder has a particle size in the range of 10-500 micron, more preferably 20-400 micron, even more preferably 40-300 micron, and most preferably 70-150.
